(19) Europäisches Patentamt
European Patent Office
Office européen des brevets

(11) EP 4 473 035 B1

(12) EUROPEAN PATENT SPECIFICATION

(45) Date of publication and mention of the grant of the patent:
**14.01.2026 Bulletin 2026/03**

(21) Application number: **23709290.3**

(22) Date of filing: **25.01.2023**

(51) International Patent Classification (IPC):
***C08G 63/181*** *(2006.01)* ***C08G 63/183*** *(2006.01)*
***C08G 63/199*** *(2006.01)* ***C08G 63/20*** *(2006.01)*
***C09D 167/02*** *(2006.01)* ***C08G 18/42*** *(2006.01)*
***C08G 18/80*** *(2006.01)* ***C08G 18/40*** *(2006.01)*
***C08G 18/54*** *(2006.01)* ***C08G 18/79*** *(2006.01)*
***C09D 175/06*** *(2006.01)*

(52) Cooperative Patent Classification (CPC):
(C-Sets available)
**C09D 167/02; C08G 18/4027; C08G 18/4202; C08G 18/423; C08G 18/54; C08G 18/542; C08G 18/792; C08G 18/80; C08G 63/181; C08G 63/183; C08G 63/199; C08G 63/20; C09D 175/06;** C08G 2390/40 (Cont.)

(86) International application number:
**PCT/US2023/061213**

(87) International publication number:
**WO 2023/147327 (03.08.2023 Gazette 2023/31)**

(54) **COATING COMPOSITION CONTAINING TMCD POLYESTER AND MALONIC POLYESTER**

BESCHICHTUNGSZUSAMMENSETZUNG MIT TMCD-POLYESTER UND MALONPOLYESTER

COMPOSITION DE REVÊTEMENT CONTENANT DU POLYESTER TMCD ET DU POLYESTER MALONIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **31.01.2022 US 202263267353 P**

(43) Date of publication of application:
**11.12.2024 Bulletin 2024/50**

(73) Proprietor: **EASTMAN CHEMICAL COMPANY**
**Kingsport TN 37660 (US)**

(72) Inventors:
- **MADDOX, John Thorton**
**Jonesborough, Tennessee 37659 (US)**
- **BROWN, Cameron Lee**
**Kingsport, Tennessee 37660 (US)**
- **DE LEON IBARRA, Selene Ayde**
**Kingsport, Tennessee 37664 (US)**
- **FENG, Linqian**
**Piney Flats, Tennessee 37686 (US)**
- **BENIAH, Goliath**
**Johnson City, Tennessee 37601 (US)**
- **KUO, Thauming**
**Kingsport, Tennessee 37664 (US)**

(74) Representative: **Ricker, Mathias**
**Wallinger Ricker Schlotter Tostmann**
**Patent- und Rechtsanwälte Partnerschaft mbB**
**Zweibrückenstraße 5-7**
**80331 München (DE)**

(56) References cited:
**US-A1- 2018 223 126**
**US-A1- 2021 062 009**
**US-B2- 10 988 632**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09D 167/02, C08L 67/02**

## Description

### BACKGROUND OF THE INVENTION

Metal containers are commonly used for food and beverage packaging. The containers are typically made of steel or aluminum. A prolonged contact between the metal and the filled product can lead to corrosion of the container. To prevent direct contact between filled product and metal, a coating is typically applied to the interior of the food and beverage cans. In order to be effective, such a coating must have adequate properties that are needed for protecting the packaged products, such as adhesion, corrosion resistance, chemical resistance, flexibility, stain resistance, and hydrolytic stability. Moreover, the coating must be able to withstand processing conditions during can fabrication and food sterilization. Coatings based on a combination of epoxy and phenolic resins are known to be able to provide a good balance of the required properties and are most widely used. Some industry sectors are moving away from food contact polymers made with bisphenol A (BPA), a basic building block of epoxy resins. Thus, there exists a need for non-BPA containing coatings for use in interior can coatings.

Polyester resins, as a replacement for epoxy resin, are of particular interest to the coating industry because of their comparable properties such as flexibility and adhesion. It is known in the art that crosslinking between common polyester and phenolic resin is too poor to provide adequate properties for use in interior can coatings. Specifically, conventional polyesters having hydroxyl functionalities are not reactive enough with phenolic resins under curing conditions to provide adequate cross-linking density, resulting in a coating that lacks good solvent resistance.

2,2,4,4-Tetramethyl-1,3-cyclobutanediol (TMCD) is a cycloaliphatic compound that can be used as a diol component for making polyesters. Thermoplastics based on TMCD polyester exhibit exceptional impact resistance owing to TMCD's unique structure. TMCD can also provide good hydrolytic stability of the polyester due to its secondary hydroxyl functionality.

Both of these properties are highly desirable in thermosetting coatings.

US2018/223126 A1 discloses a coating composition for metal food packaging comprising a polyester based on TMCD.

Coatings based on TMCD polyesters have been considered as replacements for epoxy resins for interior can coating application. Prior efforts have been directed to coating systems based on high Tg, mid-molecular weight TMCD polyesters with slight crosslinking in order to withstand processing conditions during can fabrication. Such systems, however, have been found to have shortcomings in some of the desired properties such as corrosion resistance, retort resistance, and microcracking (crazing) resistance. Higher crosslinking can lead to improved coating properties such as corrosion resistance, acid resistance, stain resistance, and retort resistance. Such coatings, however, tend to be less flexible, which can have detrimental effects on microcracking resistance and bending ability during processing. Thus, there remains a need for a suitable coating composition that can provide a good balance of the desirable coating properties for metal packaging applications.

### SUMMARY OF THE INVENTION

In one embodiment of the invention, there is provided a coating composition for metal packaging application, comprising:

a. a 2,2,4,4-tetramethyl-1,3-cyclobutanediol (TMCD) polyester,
which is the reaction product of the monomers comprising:

i. TMCD in an amount of 35-80 mole %, based on the total moles of (a)(i-iv),
ii. 1,4-cyclohexanedimethanol (1,4-CHDM) in an amount of 20-65 mole %, based on the total moles of (a)(i-iv),
iii. a diol other than TMCD and other than 1,4-CHDM in an amount of 0-25 mole %, based on the total moles of (a)(i-iv),
iv. trimethylolpropane (TMP) in an amount of 0-5 mole %, based on the total moles of (a)(i-iv),
v. an aromatic diacid in an amount of 90-100 mole %, based on the total moles of (a)(v-vi), and
vi. an aliphatic diacid in an amount of 0-10 mole %, based on the total moles of (a)(v-vi),

b. a malonic polyester, which is the reaction product of the monomers comprising:

i. a cycloaliphatic diol in an amount of 50-100 mole %, based on the total moles of (b)(i-iii),
ii. an acyclic aliphatic diol in an amount of 0-50 mole %, based on the total moles of (b)(i-iii),
iii. a triol in an amount of 0-20 mole %, based on the total moles of (b)(i-iii),
iv. malonic acid, its ester, or a combination thereof, in an amount of 30-100 mole %, based on the total moles of (b)(iv-vi),
v. an aromatic diacid in an amount of 0-70 mole %, based on the total moles of (b)(iv-vi),
vi. an aliphatic diacid in an amount of 0-30 mole %, based on the total moles of (b)(iv-vi), and

c. one or more crosslinkers selected from the group consisting of resole phenolic resin, isocyanate, amino resin crosslinkers, and mixtures thereof,

wherein said TMCD polyester has a glass transition temperature (Tg) of 60-110°C, acid number of 0-8 mg KOH/g, hydroxyl number of 3-25 mgKOH/g, number average molecular weight of 5,000-20,000 g/mole, and weight average molecular weight of 10,000-100,000 g/mole; said malonic polyester has a Tg of -20-60 °C, acid number of 0-10 mg KOH/g, hydroxyl number of 20-80 mgKOH/g, Mn of 2,000-10,000 g/mole, and Mw of 5,000-50,000 g/mole.

In another embodiment of the invention, there is provided a coating composition for metal packaging application, comprising:

a. a 2,2,4,4-tetramethyl-1,3-cyclobutanediol (TMCD) polyester in an amount of 85-95 weight % based on the total weight of (a) and (b), which is the reaction product of the monomers comprising:

i. TMCD in an amount of 35-80 mole %, based on the total moles of (a)(i-iv),
ii. 1,4-cyclohexanedimethanol (1,4-CHDM) in an amount of 20-65 mole %, based on the total moles of (a)(i-iv),
iii. a diol other than TMCD and other than 1,4-CHDM in an amount of 0-25 mole %, based on the total moles of (a)(i-iv),
iv. trimethylolpropane (TMP) in an amount of 0-5 mole %, based on the total moles of (a)(i-iv),
v. an aromatic diacid in an amount of 90-100 mole %, based on the total moles of (a)(v-vi), and
vi. an aliphatic diacid in an amount of 0-10 mole %, based on the total moles of (a)(v-vi),

b. a malonic polyester in an amount of 5-15 weight % based on the total weight of (a) and (b), which is the reaction product of the monomers comprising:

i. TMCD or 1,4-CHDM or a combination thereof in an amount of 85-100 mole %, based on the total moles of (b)(i-ii),
ii. 2-methyl-1,3-propanediol (MPdiol) in an amount of 0-15 mole %, based on the total moles of (b)(i-ii),
iii. malonic acid, its ester, or a combination thereof, in an amount of 85-100 mole %, based on the total moles of (b)(iii-iv), and
iv. isophthalic acid (IPA) in an amount of 0-15 mole %, based on the total moles of (b)(iii-iv),

c. a resole phenolic resin in an amount of 15-30 weight % based on the total weight of (a), (b), (c), and (d), and
d. isophorone diisocyanate (IPDI) in an amount of 5-15 weight % based on the total weight of (a), (b), (c), and (d),

wherein said TMCD polyester has a glass transition temperature (Tg) of 60-110°C, acid number of 0-8 mg KOH/g, hydroxyl number of 3-25 mgKOH/g, number average molecular weight (Mn) of 5,000-20,000 g/mole, and weight average molecular weight (Mw) of 10,000-100,000 g/mole; said malonic polyester has a Tg of -20 to 20 °C, acid number of 0-10 mg KOH/g, hydroxyl number of 20-100 mgKOH/g, Mn of 2,000-10,000 g/mole, and Mw of 10,000-150,000 g/mole; and wherein said coating has a solvent resistance of greater than 70 MEK double rubs as measured by ASTM D7835 and a wedge bend resistance (% pass) of 60-100 as measured by the method of ASTM D3281.

In another embodiment of the invention there is provided coating composition for metal packaging application, comprising:

a. a 2,2,4,4-tetramethyl-1,3-cyclobutanediol (TMCD) polyester in an amount of 85-95 weight % based on the total weight of (a) and (b), which is the reaction product of the monomers comprising:

i. TMCD in an amount of 35-80 mole %, based on the total moles of (a)(i-iv),
ii. 1,4-cyclohexanedimethanol (1,4-CHDM) in an amount of 20-65 mole %, based on the total moles of (a)(i-iv),
iii. a diol other than TMCD and other than 1,4-CHDM in an amount of 0-25 mole %, based on the total moles of (a)(i-iv),
iv. trimethylolpropane (TMP) in an amount of 0-5 mole %, based on the total moles of (a)(i-iv),
v. an aromatic diacid in an amount of 90-100 mole %, based on the total moles of (a)(v-vi), and
vi. an aliphatic diacid in an amount of 0-10 mole %, based on the total moles of (a)(v-vi),

b. a malonic polyester in an amount of 5-15 weight % based on the total weight of (a) and (b), which is the reaction

product of the monomers comprising:

i. TMCD in an amount of 30-50 mole %, based on the total moles of (b)(i-iii),
ii. 1,4-CHDM in an amount of 20-40 mole %, based on the total moles of (b)(i-iii),
iii. 2-methyl-1,3-propanediol (MPdiol) in an amount of 20-40 mole %, based on the total moles of (b)(i-iii),
iv. malonic acid, its ester, or a combination thereof, in an amount of 70-85 mole %, based on the total moles of (b)(iv-v), and
v. isophthalic acid (IPA) in an amount of 15-30 mole %, based on the total moles of (b)(iv-v),

c. a resole phenolic resin in an amount of 15-30 weight % based on the total weight of (a), (b), (c), and (d), and
d. isophorone diisocyanate (IPDI) in an amount of 5-15 weight % based on the total weight of (a), (b), (c), and (d),

wherein said TMCD polyester has a glass transition temperature (Tg) of 60-110°C, acid number of 0-8 mg KOH/g, hydroxyl number of 3-25 mgKOH/g, number average molecular weight (Mn) of 5,000-20,000 g/mole, and weight average molecular weight (Mw) of 10,000-100,000 g/mole; said malonic polyester has a Tg of 0 to 40 °C, acid number of 0-10 mg KOH/g, hydroxyl number of 20-100 mgKOH/g, Mn of 2,000-10,000 g/mole, and Mw of 10,000-150,000 g/mole; and wherein said coating has a solvent resistance of greater than 70 MEK double rubs as measured by ASTM D7835 and a wedge bend resistance (% pass) of 60-100 as measured by the method of ASTM D3281.

BRIEF DESCRIPTION OF THE DRAWING

Fig. 1 illustrates a modified Metal Bead Roller forming beads on a metal sheet.

## DETAILED DESCRIPTION

In this specification and in the claims that follow, reference will be made to a number of terms, which shall be defined to have the following meanings.
"Alcohol" means a chemical containing one or more hydroxyl groups.
"Aldehyde" means a chemical containing one or more -C(O)H groups.
"Aliphatic" means a compound having a non-aromatic structure.
"Diacid" means a compound having two carboxyl functional groups.
"Diamine" means a compound containing two amino groups.
Values may be expressed as "about" or "approximately" a given number. Similarly, ranges may be expressed herein as from "about" one particular value and/or to "about" or another particular value. When such a range is expressed, another aspect includes from the one particular value and/or to the other particular value. Similarly, when values are expressed as approximations, by use of the antecedent "about," it will be understood that the particular value forms another aspect.
As used herein, the terms "a," "an," and "the" mean one or more.
As used herein, the term "and/or," when used in a list of two or more items, means that any one of the listed items can be employed by itself or any combination of two or more of the listed items can be employed. For example, if a composition is described as containing components A, B, and/or C, the composition can contain A alone; B alone; C alone; A and B in combination; A and C in combination, B and C in combination; or A, B, and C in combination.
As used herein, the terms "comprising," "comprises," and "comprise" are open-ended transition terms used to transition from a subject recited before the term to one or more elements recited after the term, where the element or elements listed after the transition term are not necessarily the only elements that make up the subject.
As used herein, the terms "having," "has," and "have" have the same open-ended meaning as "comprising," "comprises," and "comprise" provided above.
As used herein, the terms "including," "includes," and "include" have the same open-ended meaning as "comprising," "comprises," and "comprise" provided above.
"Chosen from" as used herein can be used with "or" or "and." For example, Y is chosen from A, B, and C means Y can be individually A, B, or C. Alternatively, Y is chosen from A, B, or C means Y can be individually A, B, or C; or a combination of A and B, A and C, B and C, or A, B, and C.
As used herein numerical ranges are intended to include the beginning number in the range and the ending number in the range and all numerical values and ranges in between the beginning and ending range numbers. For example, the range 40o C to 60o C includes the ranges 40o C to 59o C, 41o C to 60o C, 41.5o C to 55.75o C and 40o, 41o, 42o, 43o, etc. through 60o
The term "residue," as used herein in reference to the polymers of the invention, means any organic structure incorporated into a polymer through a polycondensation or ring opening reaction involving the corresponding monomer. It

will also be understood by persons having ordinary skill in the art, that the residues associated within the various curable polyesters of the invention can be derived from the parent monomer compound itself or any derivative of the parent compound. For example, the dicarboxylic acid residues referred to in the polymers of the invention may be derived from a dicarboxylic acid monomer or its associated acid halides, esters, salts, anhydrides, or mixtures thereof. Thus, as used herein, the term "dicarboxylic acid" is intended to include dicarboxylic acids and any derivative of a dicarboxylic acid, including its associated acid halides, esters, half-esters, salts, half-salts, anhydrides, mixed anhydrides, or mixtures thereof, useful in a polycondensation process with a diol to make a curable, aliphatic polyester.

The present inventors have unexpectedly discovered that coating compositions containing a blend of TMCD polyester and malonic polyester can provide a good balance of desirable coating properties, such as solvent resistance, acid resistance, retort resistance, microcracking resistance, and bending ability, for metal packaging applications. Thus, in one embodiment of the invention, there is provided a coating composition having improved coating properties for metal packaging application, which comprises:

a. a 2,2,4,4-tetramethyl-1,3-cyclobutanediol (TMCD) polyester, which is the reaction product of the monomers comprising:

i. TMCD in an amount of 35-80 mole %, based on the total moles of (a)(i-iv),
ii. 1,4-cyclohexanedirnethanol (1,4-CHDM) in an amount of 20-65 mole %, based on the total moles of (a)(i-iv),
iii. a diol other than TMCD and other than 1,4-CHDM in an amount of 0-25 mole %, based on the total moles of (a)(i-iv).
iv. trimethylolpropane (TMP) in an amount of 0-5 mole %, based on the total moles of (a)(i-iv),
v. an aromatic diacid in an amount of 90-100 mole %, based on the total moles of (a)(v-vi), and
vi. an aliphatic diacid in an amount of 0-10 mole %, based on the total moles of (a)(v-vi),

b. a malonic polyester, which is the reaction product of the monomers comprising:

i. a cycloaliphatic diol in an amount of 50-100 mole %, based on the total moles of (b)(i-iii),
ii. an acyclic aliphatic diol in an amount of 0-50 mole %, based on the total moles of (b)(i-iii),
iii. a triol in an amount of 0-20 mole %, based on the total moles of (b)(i-iii),
iv. malonic acid, its ester, or a combination thereof, in an amount of 30-100 mole %, based on the total moles of (b)(iv-vi).
v. an aromatic diacid in an amount of 0-70 mole %, based on the total moles of (b)(iv-vi),
vi. an aliphatic diacid in an amount of 0-30 mole %, based on the total moles of (b)(iv-vi), and

c. one or more crosslinkers selected from the group consisting of resole phenolic resin, isocyanate, amino resin crosslinkers, and mixtures thereof,

wherein said TMCD polyester has a glass transition temperature (Tg) of 60-110°C, acid number of 0-8 mg KOH/g, hydroxyl number of 3-25 mgKOH/g, number average molecular weight of 5,000-20,000 g/mole, and weight average molecular weight of 10,000-100,000 g/mole; said malonic polyester has a Tg of -20-50 °C, acid number of 0-10 mg KOH/g, hydroxyl number of 20-80 mgKOH/g, Mn of 2,000-10,000 g/mole, and Mw of 5,000-50,000 g/mole.

In another embodiment of the invention, said coating has a solvent resistance of greater than 70 MEK double rubs as measured by ASTM D7835 and a wedge bend resistance (% pass) of 60-100 as measured by the method of ASTM D3281.

In a further embodiment, said coating has a microcracking resistance rating of 3-5 and a total retort resistance rating (%) of 60-100 as measured by the methods specified in the example section.

In some embodiments of the invention said TMCD (a)(i) is in an amount of 35-80, 38-70, 40-65, 40-60, 40-55, 40-50, or 40-45 mole %, based on the total moles of (a)(i-iv).

In some embodiments of the invention said 1,4-CHDM (a)(ii) is in an amount of 20-65, 25-60, 35-60, 30-55, 35-50, or 40-45 mole %, based on the total moles of (a)(i-iv).

In some embodiments of the invention said diol (a)(iii) other than TMCD and other than 1,4-CHDM in an amount of 0-25, 0-20, 0-15, 0-10, or 0-5 mole %, based on the total moles of (a)(i-iv).

In some embodiments of the invention said TMP (a)(iv) is in an amount of 0-5, 0-4, 0-3, 0-2, or 0-1 mole %, based on the total moles of (a)(i-iv).

In some embodiments of the invention an aromatic diacid (a)(v) in an amount of 90-100, 95-100, or 97-100 mole %, based on the total moles of (a)(v-vi).

In some embodiments of the invention said aliphatic diacid (a)(vi) is in an amount of 0-10, 0-5, or 0-3 mole %, based on the total moles of (a)(v-vi).

In another embodiment, TMCD (a)(i) is in an amount of 40-65 mole %, 1,4-CHDM (a)(ii) is in an amount of 35-60 mole %, the diol other than TMCD and other than 1,4-CHDM (a)(iii) is in an amount of 0-15 mole %, TMP (a)(iv) is in an amount of 0-2 mole %;based on the total moles of (a)(i-iv) and
the aromatic diacid (a)(v)is in an amount of 97-100 mole %, and the aliphatic diacid (a)(vi) is in an amount of 0-3 mole % based on the total moles of (a)(v-vi).

Said diol (a)(iii) other than TMCD and other than 1,4-CHDM includes 1,6-hexanediol, 2-methyl-1,3-propanediol (MPdiol), neopentyl glycol, 1,3-cyclohexanedimethanol (1,3-CHDM), and mixtures thereof. Desirably, said diol other than TMCD and other than 1,4-CHDM is 1,6-hexanediol, MPdiol, or a mixture thereof.

Said aromatic diacid (a)(v) includes isophthalic acid (IPA), terephthalic acid (TPA), dimethyl isophthalate, dimethyl terephthalate, and mixtures thereof. Desirably said aromatic diacid is IPA, TPA, or a mixture thereof.

Said aliphatic diacid (a)(vi) includes adipic acid, cyclohexane dicarboxylic acid, dimethyl cyclohexane dicarboxylate, and mixtures thereof. Desirably, said aliphatic diacid is adipic acid, 1,4-cyclohexane dicarboxylic acid, or a mixture thereof.

Said TMCD polyester (a) has a glass transition temperature (Tg) of 60-110°C, 60-100°C, 60-95°C, 60-90°C, 65-100°C, 65-95°C, 65-90°C, 70-110, 70-100°C, 70-95°C, 70-90°C, 75-100°C, 75-95°C, 75-90°C, 80-100°C, 80-95°C, or 80-90°C.
Said TMCD polyester (a) has a number average weight (Mn) of 5,000-20,000, 6,000-15,000, or 7,000-13,000 g/mole; and weight average weight (Mw) of 10,000-100,000, 20,000-90,000, or 30,000-80,000 g/mole.

Said TMCD polyester (a) has an acid number of 0-8, 0-5, 0-3, 0-2, 0-1, 1-5, 1-4, 1-3, 1-2, 2-5, 2-4, 2-3, 3-5, or 3-4 mgKOH/g.

Said TMCD polyester (a) has a hydroxyl number of 3-25, 5-25, 10-25, or 10-22 mgKOH/g.

In some embodiments of the invention said cyclic diol (b)(i) is present in an amount of 50-100, 60-100, or 70-100 mole %, based on the total moles of (b)(i-iii)

In some embodiments of the invention said acyclic aliphatic diol (b)(ii) is present in an amount of 0-50, 0-40, or 0-30 mole %, based on the total moles of (b)(i)-(iii).

In some embodiments of the invention said triol (b)(iii) is present in an amount of 0-20, 0-10, or 0-5 mole %, based on the total moles of (b)(i)-(iii).

In some embodiments of the invention said malonic acid (b)(iv) is present in an amount of 30-100, 35-100, 40-100, 45-100, or 50-100 mole %, based on the total moles of (b)(iv)-(vi).

In some embodiments of the invention said aromatic diacid (b)(v) is present in an amount of 0-70, 0-65, 0-60, 0-55, or 0-50 mole %, based on the total moles of (b)(iv)-(vi).

In some embodiments of the invention said aliphatic diacid (b)(v) is present in an amount of 0-30, 0-20, or 0-10 mole %, based on the total moles of (b)(iv)-(vi).

In another embodiment, said cyclic diol (b)(i) is present in an amount of 70-100 mole % based on the total moles of (b)(i)-(iii), said acyclic aliphatic diol (b)(ii) is present in an amount of 0-30 mole % based on the total moles of (b)(i)-(iii), said triol (b)(iii) is present in an amount of 0-5 mole %(b)(i)-(iii) based on the total moles of (b)(i)-(iii); said malonic acid (b)(iv) is present in an amount of 50-100 mole % based on the total moles of (b)(iv)-(vi), said aromatic diacid (b)(vi) is present in an amount of 0-50 mole % based on the total moles of (b)(iv)-(vi), and said aliphatic diacid (b)(vi) is present in an amount of 0-10 mole % based on the total moles of (b)(iv)-(vi).

Said cyclic diol (b)(i) includes TMCD, 1,4-cyclohexanedimethanol (1,4-CHDM), 1,3-cyclohexanedimethanol (1,3-CHDM), tricyclodecanedimethanol (TCDDM), isosorbide, and mixtures thereof. Desirably, said cyclic diol is TMCD, 1,4-CHDM, or a mixture thereof.

Said TCDDM (formula 1) is a mixture of isomers of 4,8-bis(hydroxymethyl)tricyclo-decane. TCDDM is also known as tricyclodecanedimethanol and tricyclodecane-4,8-dimethanol. TCDDM is available from OQ Chemicals as TCD Alcohol DM.

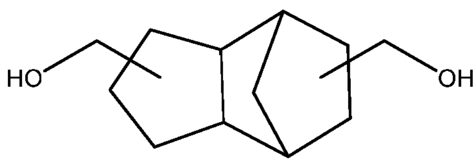

Formula 1

Examples of said acyclic aliphatic diol (b)(ii) include 1,6-hexanediol, 1,4-butanediol, 2-methyl-1,3-propanediol, neopentyl glycol, hydroxypivalyl hydroxypivalate, 2-butyl-2-ethyl-1,3-propanediol, 2,2,4-trimethyl-1,3-pentanediol, and mixtures thereof. In some embodiments, said diol (b)(ii) is selected from the group consisting of 1,6-hexanediol, 2-methyl-1,3-propanediol, neopentyl glycol, 2,2,4-trimethyl-1,3-pentanediol, and mixtures thereof.

Examples of said triol (b)(iii) include 1,1,1-trimethylolpropane, 1,1,1-trimethylolethane, glycerol, and mixtures thereof. Desirably, the triol is 1,1,1-trimethylolpropane.

Examples of said malonic acid or its ester (b)(iv) include malonic acid, dimethyl malonate, diethyl malonate, and other dialkyl malonates.

Examples of said aromatic diacid (b)(v) include isophthalic acid and its esters, such as dimethyl isophthalate, and terephthalic acid and its esters such as dimethyl terephthalate. Desirably, said aromatic diacid is isophthalic acid.

Said aliphatic diacid (b)(vi) includes $C_4$-$C_{12}$ diacids and their esters, such as succinic acid, adipic acid, sebacic acid, dodecanedioic acid, 1,4-cyclohexane dicarboxylic acid, 1,3-cyclohexane dicarboxylic acid, 1,2-cyclohexane dicarboxylic acid, and their methyl esters; and (hydrogenated) dimer acid ($C_{36}$). Desirably, when longer chain diacids (>$C_{10}$) are used, they are at a smaller ratio such as 1-5, 1-4, 1-3, or 1-2 mole %. In some embodiments, said aliphatic diacid is one or more selected from the group consisting of succinic acid, adipic acid, sebacic acid, 1,4-cyclohexane dicarboxylic acid, and 1,3-cyclohexane dicarboxylic acid. Desirably, said aliphatic diacid is sebacic acid, adipic acid, or a mixture thereof.

Said malonic polyester has a glass transition temperature (Tg) of - 20-50°C, -15-40°C, or -10-20°C.

Said malonic polyester has a number average weight of 2,000-10,000, 2,000-8,000, 2,000-6,000, 3,000-9,000, or 4,000-8,000 g/mole; weight average weight of 4,000-50,000, 4,000-40,000, or 4,000-30,000 g/mole.

Said malonic polyester has an acid number of 0-10, 0-8, 0-5, 0-3, 0-2, or 0-1 mgKOH/g.

Said malonic polyester has a hydroxyl number of 20-100, 20-80, 25-80, or 30-60 mgKOH/g.

In one embodiment of the invention, TMCD polyester (a) is in an amount of 40-95 weight % and the malonic polyester (b) is 5-60 weight %, based on the total weight % of (a) and (b).

In some embodiments of the invention, TMCD polyester (a) is in an amount of 40-95, 50-95, 60-95, 70-95, 80-95, 90-95, 45-90, 45-85, 45-80, 45-75, 45-70, 45-65, 45-60, 45-55, 50-90, 50-85, 50-80, 50-75, 50-70, 50-65, 50-60, 55-90, 55-85, 55-80, 55-75, 55-70, 55-65, 60-90, 60-85, 60-80, 60-75, 60-70, 65-90, 65-85, 65-80, 65-75, 70-90, 70-85, 70-80, 75-90, 75-85, or 80-90 weight % and the malonic polyester (b) is in an amount of 5-60, 5-50, 5-40, 5-30, 5-20, 5-10, 10-55, 15-55, 20-55, 25-55, 30-55, 35-55, 40-55, 45-55, 10-50, 15-50, 20-50, 25-50, 30-50, 35-50, 40-50, 10-45, 15-45, 20-45, 25-45, 30-45, 35-45, 10-40, 15-40, 20-40, 25-40, 30-40, 10-35, 15-35, 20-35, 25-35, 10-30, 15-30, 20-30, 10-25, 15-25, or 10-20 weight %, based on the total weight of (a) and (b).

Said crosslinker (c) is one or more selected from the group consisting of resole phenolic resin, isocyanate, and amino resin crosslinkers. Desirably, the crosslinker is resole phenolic resin, isocyanate, or a mixture thereof.

Said resole phenolic resin contains the residues of un-substituted phenol and/or meta-substituted phenols. These particular resole resins exhibit good reactivity with said polyester polyol (a). Desirably, the amount of the resole phenolic resin is at least 50 wt.% or greater than 60 wt.% or greater than 70 wt.% or greater than 80 wt.% or greater than 90 wt.% based on the weight of all cross-linker compounds.

The resole phenolic resin present in the crosslinking composition contains methylol groups on the phenolic rings. Phenolic resins having methylol functionalities are referred to as resole type phenolic resins. As is known in the art, the methylol group ($--CH_2OH$) may be etherated with an alcohol and present as $--CH_2OR$, wherein R is C1-C8 alkyl group, in order to improve resin properties such as storage stability and compatibility. For purpose of the description, the term "methylol" used herein includes both-$CH_2OH$ and $--CH_2OR$ and an un-substituted methylol group is $CH_2OH$. Said methylol groups (either $--CH_2OH$ or $--CH_2OR$) are the end groups attached to the resole resins. The methylol groups are formed during the resole resin synthesis and can further react with another molecule to form ether or methylene linkages leading to macromolecules.

The phenolic resin contains the residues of un-substituted phenols or meta-substituted phenols. When starting with phenol or meta-substituted phenols to make a resole, the para and ortho positions are both available for bridging reactions to form a branched network with final methylol end groups on the resin being in the para or ortho positions relative to the phenolic hydroxyl group. To make the phenolic resole, a phenol composition is used as a starting material. The phenol composition contains un-substituted and/or meta-substituted phenols. The amount of un-substituted, meta-substituted, or a combination of the two, that is present in the phenol compositions used as a reactant to make the phenolic resole resin, is at least 50 wt.%, or at least 60 wt.%, or at least 70 wt.%, or at least 75 wt.%, or at least 80 wt.%, or at least 85 wt.%, or at least 90 wt.%, or at least 95 wt.%, or at least 98 wt.%, based on the weight of the phenol composition used as a reactant starting material.

The phenol composition is reacted with a reactive compound such as an aldehyde at an aldehyde:phenol molar ratio (using aldehyde as an example) of greater than 1:1, or at least 1.05:1, or at least 1.1:1, or at least 1.2:1, or at least 1.25:1, or at least 1.3:1, or at least 1.35:1, or at least 1.4:1, or at least 1.45:1, or at least 1.5:1, or at least 1.55:1, or at least 1.6:1, or at least 1.65:1, or at least 1.7:1, or at least 1.75:1, or at least 1.8:1, or at least 1.85:1, or at least 1.9:1, or at least 1.95:1, or at least 2:1. The upper amount of aldehyde is not limited and can be as high as 30:1, but generally is up to 5:1, or up to 4:1, or up to 3:1, or up to 2.5:1. Typically, the ratio of aldehyde:phenol is at least 1.2:1 or more, or 1.4:1 or more or 1.5:1 or more, and typically up to 3:1. Desirably, these ratios also apply to the aldehyde/unsubstituted phenol or meta-substituted phenol ratio.

The resole phenolic resin can contain an average of at least 0.3, or at least 0.4, or at least 0.45, or at least 0.5, or at least 0.6, or at least 0.8, or at least 0.9 methylol groups per one phenolic hydroxyl group, and "methylol" includes both $--CH_2OH$ and $--CH_2OR$.

The phenolic resin obtained by the condensation of phenols with aldehydes of the general formula (RCHO)n, where R is hydrogen or a hydrocarbon group having 1 to 8 carbon atoms and n is 1, 2, or 3. Examples include formaldehyde, paraldehyde, acetaldehyde, glyoxal, propionaldehyde, furfuraldehyde, or benzaldehyde. Desirably, the phenolic resin is the reaction product of phenols with formaldehyde.

At least a part of the crosslinker in (c) comprises a resole type phenolic resin that is prepared by reacting either un-substituted phenol or meta-substituted phenol or a combination thereof with an aldehyde. The unsubstituted phenol is phenol ($C_6H_5OH$). Examples of meta-substituted phenols include m-cresol, m-ethylphenol, m-propylphenol, m-butylphenol, m-octylphenol, m-alkylphenol, m-phenylphenol, m-alkoxyphenol, 3,5-xylenol, 3,5-diethyl phenol, 3,5-dibutyl phenol, 3,5-dialkylphenol, 3,5-dicyclohexyl phenol, 3,5-dimethoxy phenol, 3-alkyl-5-alkyoxy phenol, and the like.

Although other substituted phenol compounds can be used in combination with said un-substituted phenols or meta-substituted phenols for making phenolic resins, it is desirable that at least 50%, or at least 70%, or at least 80%, or at least 90%, or at least 95%, or at least 98%, or at least 100% of the phenolic compounds used to make the resole resin are unsubstituted phenol or meta-substituted phenol.

In one aspect, the resole phenolic resin used in this invention comprises residues of m-substituted phenol.

Examples of suitable commercial phenolic resins include, but are not limited to, PHENODUR® PR 516/60B (based on cresol and formaldehyde) available from Allnex, PHENODUR® PR 371/70B (based on unsubstituted phenol and formaldehyde) also available from Allnex, and CURAPHEN 40-856 B60 (based on m-cresol and formaldehyde) available from Bitrez.

The phenolic resins are desirably heat curable. The phenolic resin is desirably not made by the addition of bisphenol A, F, or S (collectively "BPA").

The resole is desirably of the type that is soluble in alcohol. The resole resin can be liquid at 25°C. The resole resin can have a weight average molecular weight from 200 to 2000, generally from 300 to 1000, or from 400 to 800, or from 500 to 600.

The isocyanate crosslinker suitable for this invention may be blocked or unblocked isocyanate type. Examples of suitable isocyanate crosslinkers include, but are not limited to, 1,6-hexamethylene diisocyanate, methylene bis(4-cyclohexyl isocyanate), and isophorone diisocyanate. Desirably, the isocyanate crosslinker is isophorone diisocyanate (IPDI) or blocked IPDI available from COVESTRO as Desmodur® BL 2078/2. In one embodiment, the crosslinker (c) is a mixture of resole phenolic resin in an amount of 70-90 weight % and isocyanate in an amount of 10-30 weight %, based on the total weight of the crosslinkers.

In another embodiment, the crosslinker (c) is a mixture of CURAPHEN 40-856 B60 available from Bitrez and blocked isophorone diisocyanate (IPDI).

In another embodiment of the invention, the total amount of TMCD polyester (a) and malonic polyester (b) is in an amount of 50-90 weight % and said crosslinker (c) in an amount of 10-50 weight %, based on the total weight of (a), (b), and (c).

In some embodiments, the total amount of TMCD polyester (a) and the malonic polyester (b) is in 55-85, 55-80, 55-75, 55-70, 60-85, 60-80, 60-75, 60-70, 65-85, 65-80, 65-75, 70-90, 70-85, 70-80, 75-85, 80-90, or 80-85 weight %; and the crosslinker (c) in 15-45, 20-45, 25-45, 30-45, 15-40, 20-40, 25-40, 30-40, 15-35, 20-35, 25-35, 10-30, 15-30, 20-30, 15-25, 10-20, or 15-20 weight %.

In addition to resole phenolic resin and isocyanate, said crosslinker (c) may also be amino resin. The amino resin crosslinker (or cross-linking agent) can be a melamine-formaldehyde type or benzoguanamine-formaldehyde type cross-linking agent, i.e., a cross-linking agent having a plurality of $--N(CH_2OR^3)_2$ functional groups, wherein $R^3$ is C1 -C4 alkyl, preferably methyl.

In still another embodiment, the crosslinker (c) is a mixture of amino resin in an amount of 65-85 weight % and isocyanate in an amount of 15-35 weight %, based on the total weight of the crosslinkers.

In general, the amino cross-linking agent may be selected from compounds of the following formulae, wherein $R^3$ is independently C1 -C4 alkyl:

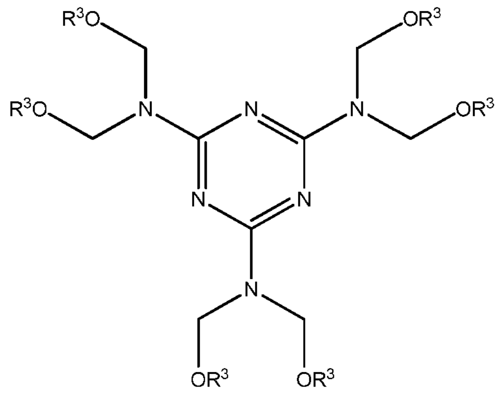

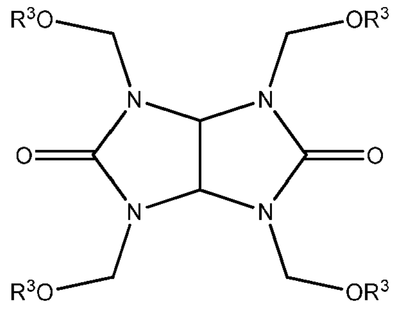

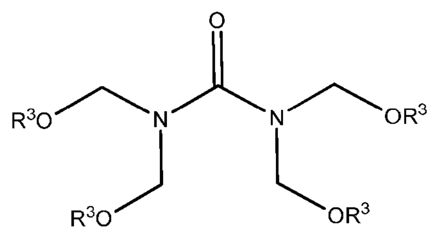

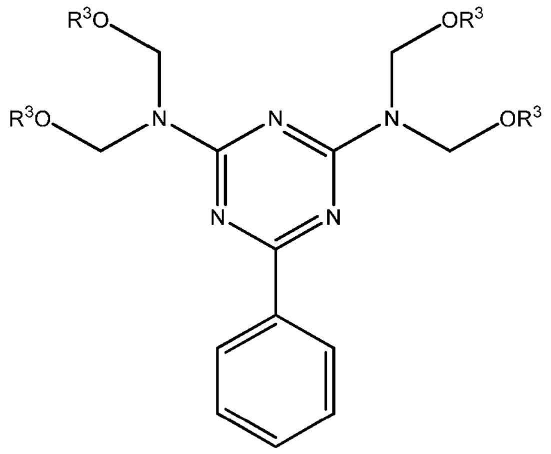

The amino containing cross-linking agents are desirably hexamethoxymethyl-melamine, hexabutoxymethylmelamine, tetramethoxymethylbenzoguanamine, tetrabutoxymethylbenzoguanamine, tetramethoxymethylurea, mixed butoxy/methoxy substituted melamines, and the like.

Desirably, in all the types of thermosetting compositions, the cross-linker composition contains greater than 50 wt.% or greater than 60 wt.% or greater than 70 wt.% or greater than 80 wt.% or greater than 90 wt.% resole phenolic resin, based on the weight of the cross-linker composition. In addition to or in the alternative, the remainder of the cross-linking compounds in the cross-linking composition, if any, are amine based crosslinking compounds as described above and/or isocyanate crosslinker.

Any of the thermosetting compositions of the invention can also include one or more cross-linking catalysts. Representative crosslinking catalysts include carboxylic acids, sulfonic acids, tertiary amines, tertiary phosphines, tin compounds, or combinations of these compounds. Some specific examples of crosslinking catalysts include p-toluenesulfonic acid, phosphoric acid, NACURE™ 155, 5076, 1051, and XC-296B catalysts sold by King Industries, BYK 450, 470, available from BYK-Chemie U.S.A., methyl tolyl sulfonimide, p-toluenesulfonic acid, dodecylbenzene sulfonic acid, dinonylnaphthalene sulfonic acid, and dinonylnaphthalene disulfonic acid, benzoic acid, triphenylphosphine, dibutyltindilaurate, and dibutyltindiacetate.

The crosslinking catalyst can depend on the type of crosslinker that is used in the coating composition. For example, the crosslinker can comprise a melamine or "amino" crosslinker and the crosslinking catalyst can comprise p-toluenesulfonic acid, phosphoric acid, unblocked and blocked dodecylbenzene sulfonic (abbreviated herein as "DDBSA"), dinonylnaphthalene sulfonic acid (abbreviated herein as "DNNSA") and dinonylnaphthalene disulfonic acid (abbreviated herein as "DNNDSA"). Some of these catalysts are available commercially under trademarks such as, for example, NACURE™ 155, 5076, 1051, 5225, and XC-296B (available from King Industries), BYK-CATALYSTS™ (available from BYK-Chemie USA), and CYCAT ™ catalysts (available from Cytec Surface Specialties).

The coating compositions of the invention can comprise one or more isocyanate crosslinking catalysts such as, for example, FASCAT™ 4202 (dibutyltindilaurate), FASCAT™ 4200 (dibutyltindiacetate, both available from Arkema), DABCO™ T-12 (available from Air Products) and K-KAT™ 348, 4205, 5218, XC-6212 non-tin catalysts (available from King Industries), and tertiary amines.

In a further embodiment of the invention, the coating composition can comprise one or more phenolic resin crosslinking catalysts including acid catalysts, such as p-toluenesulfonic acid and phosphoric acid, and basic catalysts such as, 1,8-diazabicyclo[5.4.0]undec-7-ene (DBU) and 1,5-diazabicyclo[4.3.0]non-5-ene (DBN). Additionally, the present inventors have unexpectedly discovered that quaternary ammonium compounds such as, tetramethylammonium hydroxide and tetraethylammonium hydroxide, are particularly effective in catalyzing the reaction of malonate compounds and o- or p-hydroxymethylphenol, which functions as a model compound for resole phenolic resins. Thus, the coating composition of this invention further comprises a quaternary ammonium compound as a phenolic resin crosslinking catalyst such as, for example, tetramethylammonium hydroxide, tetraethylammonium hydroxide, tetrabutylammonium hydroxide, and choline hydroxide.

The coating composition can contain one or more catalysts in an amount ranging from 0.1 to 2, 0.1 to 1, 0.1 to 0.5, or 0.1 to 0.3 weight %, based on the total weight of any of the aforementioned curable polyester resins and the crosslinker composition.

In another embodiment, the coating composition of the present invention further comprises one or more organic solvents. Suitable organic solvents include xylene, ketones (for example, methyl amyl ketone), 2-butoxyethanol, ethyl-3-ethoxypropionate, toluene, butanol, cyclopentanone, cyclohexanone, ethyl acetate, butyl acetate, Aromatic 100 and Aromatic 150 (both available from ExxonMobil), and other volatile inert solvents typically used in industrial baking (i.e., thermosetting) enamels, mineral spirits, naptha, toluene, acetone, methyl ethyl ketone, methyl isoamyl ketone, isobutyl acetate, t-butyl acetate, n-propyl acetate, isopropyl acetate, methyl acetate, ethanol, n-propanol, isopropanol, sec-butanol, isobutanol, ethylene glycol monobutyl ether, propylene glycol n-butyl ether, propylene glycol methyl ether, propylene glycol monopropyl ether, dipropylene glycol methyl ether, diethylene glycol monobutyl ether, trimethylpentanediol mono-isobutyrate, ethylene glycol mono-octyl ether, diacetone alcohol, 2,2,4-trimethyl-1,3-pentanediol mono-isobutyrate (available commercially from Eastman Chemical Company under the trademark TEXANOL™), or combinations thereof.

The amount of solvents is desirably at least 20 wt.%, or at least 25 wt.%, or at least 30 wt.%, or at least 35 wt.%, or at least 40 wt.%, or at least 45 wt.%, or at least 50 wt.%, or at least 55 wt.% based on the weight of the solvent containing coating composition. Additionally or in the alternative, the amount of organic solvents can be up to 85 wt.% based on the weight of the coating composition.

In some embodiments of the invention, the coating has MEK double rubs of 70 to 100 or greater, 80 to 100 or greater, or 90 to 100 or greater as measured by the method of ASTM D7835; a wedge bend resistance (% pass) of 60-100, 65-100, 70-100, 75-100, or 80-100 as measured by the method of ASTM D3281. In further embodiments of the invention, the coating has a microcracking resistance rating of 3-5, 3.5-5, 4-5, or 4.5-5 and a total retort resistance rating (%) of 60-100, 70-100, 80-100, or 90-100 as measured by the methods specified in the Example section.

In a further embodiment, this invention provides a coating composition for gold-color coating having improved coating properties for metal packaging application, which comprises:

a. a 2,2,4,4-tetramethyl-1,3-cyclobutanediol (TMCD) polyester in an amount of 85-95 weight % based on the total weight of (a) and (b), which is the reaction product of the monomers comprising:

i. TMCD in an amount of 35-80 mole %, based on the total moles of (a)(i-iv),
ii. 1,4-cyclohexanedimethanol (1,4-CHDM) in an amount of 20-65 mole %, based on the total moles of (a)(i-iv),
iii. a diol other than TMCD and other than 1,4-CHDM in an amount of 0-25 mole %, based on the total moles of (a)(i-iv),
iv. trimethylolpropane (TMP) in an amount of 0-5 mole %, based on the total moles of (a)(i-iv),
v. an aromatic diacid in an amount of 90-100 mole %, based on the total moles of (a)(v-vi), and
vi. an aliphatic diacid in an amount of 0-10 mole %, based on the total moles of (a)(v-vi),

b. a malonic polyester in an amount of 5-15 weight % based on the total weight of (a) and (b), which is the reaction product of the monomers comprising:

i. TMCD or 1,4-CHDM or a combination thereof in an amount of 85-100 mole %, based on the total moles of (b)(i-ii),
ii. 2-methyl-1,3-propanediol (MPdiol) in an amount of 0-15 mole %, based on the total moles of (b)(i-ii),
iii. malonic acid, its ester, or a combination thereof, in an amount of 85-100 mole %, based on the total moles of (b)(iii-iv), and
iv. isophthalic acid (IPA) in an amount of 0-15 mole %, based on the total moles of (b)(iii-iv),

c. a resole phenolic resin in an amount of 15-30 weight % based on the total weight of (a), (b), (c), and (d), and
d. isophorone diisocyanate (IPDI) in an amount of 5-15 weight % based on the total weight of (a), (b), (c), and (d),

wherein said TMCD polyester has a glass transition temperature (Tg) of 60-110°C, acid number of 0-8 mg KOH/g ), hydroxyl number of 3-25 mgKOH/g, number average molecular weight (Mn) of 5,000-20,000 g/mole, and weight average molecular weight (Mw) of 10,000-100,000 g/mole; said malonic polyester has a Tg of -20 to 20 °C, acid number of 0-10 mg

KOH/g, hydroxyl number of 20-100 mgKOH/g, Mn of 2,000-10,000 g/mole, and Mw of 10,000-150,000 g/mole; and wherein said coating has a solvent resistance of greater than 70 MEK double rubs as measured by ASTM D7835 and a wedge bend resistance (% pass) of 60-100 as measured by the method of ASTM D3281.

In another embodiment, said coating has a microcracking resistance rating of 3-5 and a total retort resistance rating (% pass) of 60-100 as measured by the methods specified in the example section.

In a further embodiment, this invention provides a coating composition for gold-color coating having improved coating properties for metal packaging application, which comprises:

a. a 2,2,4,4-tetramethyl-1,3-cyclobutanediol (TMCD) polyester in an amount of 85-95 weight % based on the total weight of (a) and (b), which is the reaction product of the monomers comprising:

i. TMCD in an amount of 35-80 mole %, based on the total moles of (a)(i-iv),
ii. 1,4-cyclohexanedimethanol (1,4-CHDM) in an amount of 20-65 mole %, based on the total moles of (a)(i-iv),
iii. a diol other than TMCD and other than 1,4-CHDM in an amount of 0-25 mole %, based on the total moles of (a)(i-iv),
iv. trimethylolpropane (TMP) in an amount of 0-5 mole %, based on the total moles of (a)(i-iv),
v. an aromatic diacid in an amount of 90-100 mole %, based on the total moles of (a)(v-vi), and
vi. an aliphatic diacid in an amount of 0-10 mole %, based on the total moles of (a)(v-vi),

b. a malonic polyester in an amount of 5-15 weight % based on the total weight of (a) and (b), which is the reaction product of the monomers comprising:

i. TMCD in an amount of 30-50 mole %, based on the total moles of (b)(i-iii),
ii. 1,4-CHDM in an amount of 20-40 mole %, based on the total moles of (b)(i-iii),
iii. 2-methyl-1,3-propanediol (MPdiol) in an amount of 20-40 mole %, based on the total moles of (b)(i-iil),
iv. malonic acid, its ester, or a combination thereof, in an amount of 70-85 mole %, based on the total moles of (b)(iv-v), and
v. isophthalic acid (IPA) in an amount of 15-30 mole %, based on the total moles of (b)(iv-v),

c. a resole phenolic resin in an amount of 15-30 weight % based on the total weight of (a), (b), (c), and (d), and
d. isophorone diisocyanate (IPDI) in an amount of 5-15 weight % based on the total weight of (a), (b), (c), and (d),

wherein said TMCD polyester has a glass transition temperature (Tg) of 60-110°C, acid number of 0-8 mg KOH/g ), hydroxyl number of 3-25 mgKOH/g, number average molecular weight (Mn) of 5,000-20,000 g/mole, and weight average molecular weight (Mw) of 10,000-100,000 g/mole; said malonic polyester has a Tg of 0 to 40 °C, acid number of 0-10 mg KOH/g, hydroxyl number of 20-100 mgKOH/g, Mn of 2,000-10,000 g/mole, and Mw of 10,000-150,000 g/mole; and wherein said coating has a solvent resistance of greater than 70 MEK double rubs as measured by ASTM D7835 and a wedge bend resistance (% pass) of 60-100 as measured by the method of ASTM D3281.

In another embodiment, said coating has a microcracking resistance rating of 3-5 and a total retort resistance rating (% pass) of 60-100 as measured by the methods specified in the example section.

The coating composition may also comprise at least one pigment. Typically, the pigment is present in an amount of about 20 to about 60 weight percent, based on the total weight of the composition. Examples of suitable pigments include titanium dioxide, barytes, clay, calcium carbonate, and Cl Pigment White 6 (titanium dioxide). For example, the solvent-borne, coating formulations can contain titanium dioxide as the white pigment available from CHEMOURS as Ti-Pure™ R 900.

After formulation, the coating composition can be applied to a substrate or article. Thus, a further aspect of the present invention is a shaped or formed article that has been coated with the coating compositions of the present invention. The substrate can be any common substrate such as aluminum, tin, steel or galvanized sheeting; urethane elastomers; primed (painted) substrates; and the like. The coating composition can be coated onto a substrate using techniques known in the art, for example, by spraying, draw-down, roll-coating, etc., about 0.1 to about 4 mils (1 mil = 25 μm), or 0.5 to 3, or 0.5 to 2, or 0.5 to 1 mils of wet coating onto a substrate. The coating can be cured at a temperature of about 50°C to about 230°C, for a time period that ranges from about 5 seconds to about 90 minutes and allowed to cool. Examples of coated articles include metal cans for food and beverages, in which the interiors are coated with the coating composition of the present invention.

Thus, this invention further provides an article, of which at least a portion is coated with the coating composition of the present invention.

## EXAMPLES

This invention can be further illustrated by the following examples thereof, although it will be understood that these examples are included merely for purposes of illustration and are not intended to limit the scope of the invention unless otherwise specifically indicated.

### Abbreviations:

mL is milliliter; wt % is weight percent; eq is equivalent(s); hrs or h is hour(s); mm is millimeter; m is meter; °C is degree Celsius; min is minute; g is gram; mmol is millimole; mol is mole; kg is kilogram; L is liter; w/v is weight/volume; μL is microliter; and MW is molecular weight.

### Coating Test Methods:

Substrate, Coated Test Panel Preparation, Film Weight

Electrolytic tin plate (ETP) substrate panel was supplied by Reynolds Metals Company - 0.19 mm thickness, 2.2 g/$m^2$ tin content, temper and annealing type DR-8CA. The substrate was coated by casting wet films with a wire wound rod, RDS 10 available from R.D. Specialties, Inc. This yielded a final dry film weight) of approximately 6 - 7 grams/$m^2$. The cast panels were placed in a rack to hold them vertically in an oven for cure. A Despatch forced air oven was preheated to a setting temperature of 203 °C. The coated panels in a rack were then placed into the oven for 18 minutes of bake cycle time in order to allow the coatings to be baked at 200 °C Peak Metal Temperature (PMT) for 10 minutes. In conclusion of baking cycle, the panel rack was removed from oven and allowed to cool back to ambient conditions. A Sencon SI9600 coating thickness gauge was used to confirm the dry film weight of the applied coatings.

Wedge Bend

A coupon measuring 1.25" wide×4" long was cut from the coated panel. This coupon was tested by a Gardco coverall bend and impact tester following ASTM D 3281. To make a bend test, the coated coupon was first bent over the 1/8" (0.32 cm) steel rod. The bent coupon was placed between the parts of a butt hinge. The hinge made of two steel blocks is attached to the base below the guide tube. When the hinge is closed, it creates a wedge shape gap between the upper and lower parts ranging from 1/8" at the hinged end to zero thickness at the free end. Then the impact tool, flat face down, was dropped from a height of one or two feet onto the upper part of the hinge. Once coated coupon was bent and impacted into a wedge shape, it was then soaked in an acidified copper sulfate solution (5 wt.% copper sulfate, 15 wt.% hydrochloric acid (35%), 80 wt.% distilled water) for 5 minutes to make any coating cracking visible. Excess copper sulfate solution was removed by washing with water and blotting with a dry towel. Wedge bend failure (mm) measured by using a ruler and a lighted magnifying glass is defined as the total length of continuous crack along the bent edge of the coupon. The result is reported as Pass % of wedge bend which is calculated by:

$$\text{Pass \% of wedge bend} = \frac{(\text{Total length} - \text{wedge bend failure})}{\text{Total length}} \times 100\%$$

Each Pass % of wedge bend in this experiment is an average value from 3 replicates.

Methyl Ethyl Ketone (MEK) Double Rubs

The resistance to MEK solvent was measured using a MEK rub test machine (Gardco MEK Rub Test Machine AB-410103EN with 1 kg block). This test was carried out similar to ASTM D7835. MEK solvent resistance was reported as the number of double rubs a coated panel can take before the coating starts to be removed. For example, one back-and-forth motion constitutes one double rub. A maximum of 100 double rubs was set as the upper limit for each evaluation.

Sterilization Resistance Testing

A coated coupon measuring 2.5" wide×4" long was cut from the coated panel. The coupons were then placed in 16 oz wide mouth Le Parfait glass jar half filled with the food simulant where half the coupon is above food simulant liquid and the other half is submerged in food simulant liquid. Two different food simulants were evaluated:

- Lactic acid: 2% lactic acid, 98% deionized water.
- Acetic Acid: 3% acetic acid, 97% deionized water.

The jars with properly closed top were placed in an autoclave, Priorclave Model PNA/QCS/EH150, for 1 hr at 131° C. Once the retort process was finished, the autoclave was allowed to depressurize to ambient conditions. After the completion of sterilization cycle, the glass jars containing the test coupons were then removed from the autoclave. The coupons were removed from the jars and washed under water and blotted dry with paper towels. Typically, the retort performance is rated on a scale of 0 (worst) to 5 (best) using a visual observation. For each food simulant, the retort performance was rated on (1) blush at vapor phase, (2) blush at liquid phase, (3) roughness at vapor phase, (4) roughness at liquid phase and (5) crosshatch adhesion (following ASTM D 3359) at liquid phase, respectively. An overall retort performance is reported as Total Retort % calculated by:

$$\text{Total Retort \%} = \frac{\text{Sum of rating (1) to (5) from 2\% lactic acid} + \text{Sum of rating (1) to (5)from 3\% acetic acid}}{50} \times 100\%$$

Each retort rating in this experiment is an average rating from 2 replicates.

Micro-cracking Test

For micro-cracking evaluation, two methods were used to create a beading pattern on a coated panel to simulate a beaded metal can.

Microcracking Test Method # 1: To execute the micro-cracking test with the help of a mold "beader" a coupon measuring 2.5" wide x 4" long was cut from the coated panel and placed in between the two plates of the beader. A Hydraulic Press (Model: PW-220-C-X1-4; S/N: 85-2-006) [ RAM Force in 1000 Lb increments; 4" RAM = 4000Lbs] was used to apply force (20,000 lbs) between the top and bottom plates to bead the test panels.

Microcracking Test Method # 2: To execute the micro-cracking test, with the help of a metal bead roller shown in Figure 1, a coupon measuring 1" wide x 4" long was cut and inserted into the gap between the two rollers of the modified metal bead roller and followed by a deformation process as running through the roller. With the function of a die, the two rollers with a large array of beading ripples reproduced the beading patterns from a range of can sizes (from 4 oz to 3 kg). The gap between the rollers was adjusted corresponding to the thickness of the tinplate.

For both microcracking test methods, the coating film weight was in a range of 3.0 - 3.5 gram/m$^2$. After the beading process, the uncoated area of a panel including the edges and the backside was covered by vinyl tape (Yellow Heat-Treated 3M 471), and followed by a 90-minute immersion in acidified copper sulfate solution which stained any area where cracking or micro-cracking occurred on the coating due to the process. Acidified copper sulfate solution used in the experiment consisted of 16 wt% copper sulfate, 5 wt% hydrochloric acid (35%), and 79 wt% distilled water. All samples were taken out from copper sulfate solution, rinsed with water, dried with a paper towel, and evaluated for stain on a 1 to 5 scale with 5 being 0% stained area, 1 being ≥ 50% stained area, and 0.5 interval on rating for every 5% change on stained area. Each microcracking test in this experiment is an average value from 2 replicates.

Example 1: Synthesis of Malonic Polyester-(MR 1)

The polyol was produced using a resin kettle reactor setup controlled with automated control software. The compositions were produced on a 3.6 mole scale using a 2 L glass kettle with overhead stirring and a partial condenser topped with total condenser and Dean Stark trap. Dimethyl malonate (MAL), 1,4-cyclohexane dimethanol (CHDM), and Fascat 4102 (butyltin tris(2-ethylhexanoate)) catalyst were added to the reactor which was then completely assembled. The reaction mixture was blanketed with nitrogen, stirred at 300 RPM, and heated from room temperature to 200 °C using the automation system (recipe shown in Table 2 below). Once the desired volume of methanol distillate was collected, the reaction mixture was diluted with A150ND, ShellSol™ A150 ND by Shell Chemicals which is C9-C10 aromatic hydrocarbon solvent, to target a weight percent solids of 55%. This solution was filtered through a ~100 µm felt filter prior to use in formulation and application testing.

The charges are shown in Table 1.

Table 1

| Charge | | | | | |
|---|---|---|---|---|---|
| **Raw Material** | **Moles** | **Equivalents** | **Weight (g)** | **Charge Weight (including excess)** | **% Excess** |
| ***Stage 1*** | | | | | |
| MAL | 3.59 | 1.000 | 474.80 | **474.80** | 0 |
| CHDM | 3.74 | 1.042 | 540.03 | **540.03** | 0 |
| | | ***Total Charge*** | 1014.83 | | |
| | | ***Minus Condensate*** | 164.83 | | |
| | | ***Yield*** | 850.00 | | |
| **(Catalyst)** | **Concentration (wt%)** | | | | |
| Fascat 4102 | 0.2 (392 ppm Sn) | | | **1.70** | |

Table 2

| Recipe | | | | |
|---|---|---|---|---|
| **Step** | **Time (min)** | **Temp (°C)** | **Vac (torr)** | **Stir (rpm)** |
| 1 | 0.1 | 160 | 730 | 300 |
| 2 | 6 | 200 | 730 | 300 |
| 3 | 45 | 200 | 730 | 300 |
| 4 | 0.1 | 200 | 730 | 300 |
| 5 | 5 | 200 | 730 | 300 |
| 6 | 0.1 | 200 | 730 | 300 |
| 7 | 15 | 200 | 730 | 300 |
| 8 | 0.1 | 200 | 730 | 300 |
| 9 | 52 | 200 | 730 | 300 |
| 10 | 0.1 | 200 | 730 | 300 |
| 11 | 128 | 200 | 730 | 300 |
| 12 | 40 | 200 | 730 | 300 |

Example 2: Synthesis of Malonic Polyester- (MR 2)

The polyol was produced using a resin rig reactor setup controlled with automated control software. A 500 mL, one-neck, round-bottom flask was carefully charged with dimethyl malonate (MAL), 1,4-cyclohexanedimethanol (CHDM), and Fascat 4102 (butyltin tris(2-ethylhexanoate)) catalyst in the amounts shown in Table 3 below. The flask was equipped with a polymer head adapter with stainless steel mechanical stirrer and securely clamped to the polymerization rig. To the polymer head, a distillation side arm and Erlenmeyer flask were attached. The automated-controlled vacuum system was attached to the flask side arm to allow for a reduction in pressure of the reaction vessel. The Belmont metal bath was preheated to 20°C above the recipe starting temperature (recipe shown in Table 4 below). The apparatus was subjected to two iterations of a nitrogen ($N_2$) purge to remove oxygen and then dunked into the metal bath to begin stage 1 of the recipe. Dry ice was used to ensure that the solvent traps were sufficiently cold to prevent any solvent/organic matter from going to the vacuum pump. After completion of the synthetic recipe, the polymer was cooled in dry-ice and removed from the stir-rod. The cold material was broken up with a hammer then dissolved in A150ND to a target weight percent of 50% solids and filtered through a ~250 μm paint filter prior to use in the formulation and application testing.

Table 3

| Charge | | | | | |
|---|---|---|---|---|---|
| **Raw Material** | **Moles** | **Equivalents** | **Weight (g)** | **Charge Weight (including excess)** | **% Excess** |
| ***Stage 1*** | | | | | |
| MAL | 0.50 | 1.000 | 66.06 | **66.06** | 0 |
| CHDM | 0.51 | 1.020 | 73.55 | **73.55** | 0 |

(continued)

| Charge | | | | | |
|---|---|---|---|---|---|
| **Raw Material** | **Moles** | **Equivalents** | **Weight (g)** | **Charge Weight (including excess)** | **% Excess** |
| ***Stage 1*** | | | | | |
| | | ***Total Charge*** | 139.61 | | |
| | | ***Minus Condensate*** | 40.51 | | |
| | | ***Yield*** | 99.10 | | |
| **(Catalyst)** | **Concentration (wt%)** | | | | |
| Fascat 4102 | 400 ppm Sn | | | **0.22 mL** | |

Table 4

| Recipe | | | | |
|---|---|---|---|---|
| **Step** | **Time (min)** | **Temp (°C)** | **Vac (torr)** | **Stir (rpm)** |
| 1 | 0.1 | 150 | 730 | 0 |
| 2 | 1 | 150 | 730 | 200 |
| 3 | 120 | 200 | 730 | 200 |
| 4 | 30 | 200 | 730 | 200 |
| 5 | 30 | 200 | 1.5 | 200 |
| 6 | 120 | 200 | 1.5 | 200 |
| 7 | 2 | 200 | 730 | 0 |

Example 3: Synthesis of Malonic Polyester- (MR 3)

The polyol was produced using a resin rig reactor setup controlled with automated control software. A 500 mL, one-neck, round-bottom flask was carefully charged with dimethyl malonate (MAL), 1,4-cyclohexanedimethanol (CHDM), and Fascat 4102 (butyltin tris(2-ethylhexanoate)) catalyst in the amounts shown in Table 5 below. The flask was equipped with a polymer head adapter with stainless steel mechanical stirrer and securely clamped to the polymerization rig. To the polymer head, a distillation side arm and Erlenmeyer flask were attached. The automated-controlled vacuum system was attached to the flask side arm to allow for a reduction in pressure of the reaction vessel. The Belmont metal bath was preheated to 20°C above the recipe starting temperature (recipe shown in Table 6 below). The apparatus was subjected to two iterations of a nitrogen ($N_2$) purge to remove oxygen and then dunked into the metal bath to begin stage 1 of the recipe. Dry ice was used to ensure that the solvent traps were sufficiently cold to prevent any solvent/organic matter from going to the vacuum pump. After completion of the synthetic recipe, the polymer was cooled in dry-ice and removed from the stir-rod. The cold material was broken up with a hammer then dissolved in A150ND to a target weight percent of 50% solids and filtered through a ~250 µm paint filter prior to use in the formulation and application testing.

Table 5

| Charge | | | | | |
|---|---|---|---|---|---|
| **Raw Material** | **Moles** | **Equivalents** | **Weight (g)** | **Charge Weight (including excess)** | **% Excess** |
| ***Stage 1*** | | | | | |
| MAL | 0.50 | 1.000 | 66.06 | **66.06** | 0 |
| CHDM | 0.51 | 1.020 | 73.55 | **73.55** | 0 |
| | | ***Total Charge*** | 139.61 | | |
| | | ***Minus Condensate*** | 40.51 | | |
| | | ***Yield*** | 99.10 | | |

(continued)

| (Catalyst) | Concentration (wt%) | | | |
|---|---|---|---|---|
| Fascat 4102 | 400 ppm Sn | | **0.22 mL** | |

Table 6

| Recipe | | | | |
|---|---|---|---|---|
| **Step** | **Time (min)** | **Temp (°C)** | **Vac (torr)** | **Stir (rpm)** |
| 1 | 0.1 | 150 | 730 | 0 |
| 2 | 1 | 150 | 730 | 200 |
| 3 | 30 | 150 | 730 | 200 |
| 4 | 0.1 | 160 | 730 | 200 |
| 5 | 30 | 160 | 730 | 200 |
| 6 | 0.1 | 170 | 730 | 200 |
| 7 | 30 | 170 | 730 | 200 |
| 8 | 0.1 | 180 | 730 | 200 |
| 9 | 30 | 180 | 730 | 200 |
| 10 | 0.1 | 200 | 730 | 200 |
| 11 | 30 | 200 | 730 | 200 |
| 12 | 30 | 200 | 1.5 | 200 |
| 13 | 120 | 200 | 1.5 | 0 |
| 14 | 2 | 200 | 730 | 0 |

Example 4: Synthesis of Malonic Polyester- (MR4)

The polyol was produced using a resin rig reactor setup controlled with automated control software. A 500 mL, one-neck, round-bottom flask was carefully charged with Dimethyl malonate (MAL), 2,2,4,4-tetramethyl-1,3-cyclobutanediol (TMCD), and Fascat 4100 (monobutyltin oxide) catalyst in the amounts shown in Table 7 below. The flask was equipped with a polymer head adapter with stainless steel mechanical stirrer and securely clamped to the polymerization rig. To the distillation head, a distillation side arm and Erlenmeyer flask were attached. The automated-controlled vacuum system was attached to the flask side arm to allow for a reduction in pressure of the reaction vessel. The Belmont metal bath was preheated to 20°C above the recipe starting temperature (recipe shown in Table 8 below). The apparatus was subjected to two iterations of a nitrogen ($N_2$) purge to remove oxygen and then dunked into the metal bath to begin stage 1 of the recipe. Dry ice was used to ensure that the solvent traps were sufficiently cold to prevent any solvent/organic matter from going to the vacuum pump. After completion the synthetic recipe, the polymer was cooled in dry-ice and removed from the stir-rod. The cold material was broken up with a hammer, then dissolved in A150ND to a target weight percent of 50% solids and filtered through a ~250 μm paint filter prior to use in the formulation and application testing.

Table 7

| Charge | | | | | |
|---|---|---|---|---|---|
| **Raw Material** | **Moles** | **Equivalents** | **Weight (g)** | **Charge Weight (includin g excess)** | **% Exces s** |
| ***Stage 1*** | | | | | |
| MAL | 0.5000 | 1.0000 | 66.06 | **69.36** | 5 |
| TMCD | 0.5505 | 1.1011 | 79.39 | **83.36** | 5 |
| | | ***Total Charge*** | 145.45 | | |
| | | ***Minus Condensate*** | 32.04 | | |
| | | ***Yield*** | 113.41 | | |
| **(Catalyst)** | **Concentration (ppm)** | | | | |
| Fascat 4100 | 400 | | | 0.11 | |

Table 8

| Recipe | | | | |
|---|---|---|---|---|
| Step | Time (min) | Temp (°C) | Vac (torr) | Stir (rpm) |
| 1 | 1 | 160 | 730 | 0 |
| 2 | 120 | 200 | 730 | 100 |
| 3 | 60 | 200 | 730 | 100 |
| 4 | 30 | 200 | 1.5 | 100 |
| 5 | 60 | 200 | 1.5 | 100 |
| 6 | 0.5 | 200 | 730 | 0 |

Example 5: Synthesis of Malonic Polyester- (MR 5)

The polyol was produced using a resin rig reactor setup controlled with automated control software. A 500 mL, one-neck, round-bottom flask was carefully charged with purified isophthalic acid (IPA), 2,2,4,4-tetramethyl-1,3-cyclobutanediol (TMCD), 1,4-cyclohexanedimethanol (CHDM), 2-methyl-1,3-propanediol (MP Diol), and Fascat 4100 (monobutyltin oxide) catalyst in the amounts shown in Table 9 below. The flask was equipped with a polymer head adapter with stainless steel mechanical stirrer and securely clamped to the polymerization rig. To the distillation head, a distillation side arm and Erlenmeyer flask were attached. The automated-controlled vacuum system was attached to the flask side arm to allow for a reduction in pressure of the reaction vessel. The Belmont metal bath was preheated to 20°C above the recipe starting temperature (recipe shown in Table 10 below). The apparatus was subjected to two iterations of a nitrogen ($N_2$) purge to remove oxygen and then dunked into the metal bath to begin stage 1 of the recipe. Dry ice was used to ensure that the solvent traps were sufficiently cold to prevent any solvent/organic matter from going to the vacuum pump. At stage 4 of the reaction recipe, the metal heating bath is lowered down from the reaction flask and the flask was allowed to cool for 15 minutes. Then dimethyl malonate (MAL) was injected through the sample port septum via syringe. The reaction was mixed for an additional 15 minutes and then the metal bath was raised back up to submerge the flask to proceed the rest of the recipe. After completion the synthetic recipe, the polymer was cooled in dry-ice and removed from the stir-rod. The cold material was broken up with a hammer, then dissolved in A150ND to a target weight percent of 50% solids and filtered through a ~250 μm paint filter prior to use in the formulation and application testing.

Table 9

| Charge | | | | | |
|---|---|---|---|---|---|
| **Raw Material** | **Moles** | **Equivalents** | **Weight (g)** | **Charge Weight (including excess)** | **% Excess** |
| ***Stage 1*** | | | | | |
| PIA | 0.1250 | 0.2500 | 20.77 | **20.77** | 0 |
| TMCD | 0.2077 | 0.4154 | 29.95 | **31.45** | 5 |
| 1,4-CHDM | 0.1558 | 0.3116 | 22.47 | **22.69** | 1 |
| MP Diol | 0.1558 | 0.3116 | 14.04 | **14.18** | 1 |
| ***Stage 2*** | | | | | |
| MAL | 0.3750 | 0.7500 | 49.54 | **49.54** | 5 |
| | | ***Total Charge*** | 136.77 | | |
| | | ***Minus Condensate*** | 28.54 | | |
| | | ***Yield*** | 108.23 | | |
| **(Catalyst)** | **Concentration (ppm)** | | | | |
| Fascat 4100 | 400 | | | 0.10 | |

Table 10

| Recipe | | | | |
|---|---|---|---|---|
| Step | Time (min) | Temp (°C) | Vac (torr) | Stir (rpm) |
| 1 | 1 | 160 | 730 | 0 |

(continued)

| Recipe | | | | |
|---|---|---|---|---|
| Step | Time (min) | Temp (°C) | Vac (torr) | Stir (rpm) |
| 2 | 180 | 230 | 730 | 100 |
| 3 | 90 | 230 | 730 | 100 |
| 4 | 30 | 160 | 730 | 0 |
| 5 | 90 | 230 | 730 | 100 |
| 6 | 30 | 230 | 1.5 | 100 |
| 7 | 30 | 230 | 1.5 | 100 |
| 8 | 0.5 | 230 | 730 | 0 |

Example 6: Synthesis of Malonic Polyester- (MR 6)

The polyol was produced using a resin rig reactor setup controlled with automated control software. A 500 mL, one-neck, round-bottom flask was *carefully* charged with purified isophthalic acid (IPA), 2,2,4,4-tetramethyl-1,3-cyclobutanediol (TMCD), 1,4-cyclohexanedimethanol (CHDM), 2-methyl-1,3-propanediol (MP Diol), and Fascat 4100 (monobutyltin oxide) catalyst in the amounts shown in the Table 11 below. The flask was equipped with a polymer head adapter with stainless steel mechanical stirrer and securely clamped to the polymerization rig. To the distillation head, a distillation side arm and Erlenmeyer flask were attached. The automated-controlled vacuum system was attached to the flask side arm to allow for a reduction in pressure of the reaction vessel. The Belmont metal bath was preheated to 20°C above the recipe starting temperature (recipe shown in Table 12 below). The apparatus was subjected to two iterations of a nitrogen ($N_2$) purge to remove oxygen and then dunked into the metal bath to begin stage 1 of the recipe. Dry ice was used to ensure that the solvent traps were sufficiently cold to prevent any solvent/organic matter from going to the vacuum pump. At stage 4 of the reaction recipe, the metal heating bath is lowered down from the reaction flask and the flask was allowed to cool for 15 minutes. Then dimethyl malonate (MAL) was injected through the sample port septum via syringe. The reaction was mixed for an additional 15 minutes and then the metal bath was raised back up to submerge the flask to proceed the rest of the recipe. After completion the synthetic recipe, the polymer was cooled in dry-ice and removed from the stir-rod. The cold material was broken up with a hammer, then dissolved in A150ND to a target weight percent of 50% solids and filtered through a ~250 μm paint filter prior to use in the formulation and application testing.

Table 11

| Charge | | | | | |
|---|---|---|---|---|---|
| Raw Material | Moles | Equivalents | Weight (g) | Charge Weight (includin g excess) | % Excess |
| ***Stage 1*** | | | | | |
| PIA | 0.2500 | 0.5000 | 41.53 | **41.53** | 0 |
| TMCD | 0.2083 | 0.4166 | 30.04 | **31.54** | 5 |
| 1,4-CHDM | 0.1562 | 0.3124 | 22.53 | **22.75** | 1 |
| MP Diol | 0.1562 | 0.3124 | 14.07 | **14.22** | 1 |
| ***Stage 2*** | | | | | |
| MAL | 0.2500 | 0.5000 | 33.03 | **33.03** | 5 |
| | | ***Total Charge*** | 141.20 | | |
| | | ***Minus Condensate*** | 25.03 | | |
| | | ***Yield*** | 116.17 | | |
| **(Catalyst)** | **Concentration (ppm)** | | | | |
| Fascat 4100 | 400 | | | **0.10** | |

Table 12

| Recipe | | | | |
|---|---|---|---|---|
| Step | Time (min) | Temp (°C) | Vac (torr) | Stir (rpm) |
| 1 | 1 | 160 | 730 | 0 |

(continued)

| Recipe | | | | |
|---|---|---|---|---|
| Step | Time (min) | Temp (°C) | Vac (torr) | Stir (rpm) |
| 2 | 180 | 240 | 730 | 100 |
| 3 | 90 | 240 | 730 | 100 |
| 4 | 30 | 160 | 730 | 0 |
| 5 | 90 | 230 | 730 | 100 |
| 6 | 30 | 230 | 1.5 | 100 |
| 7 | 60 | 230 | 1.5 | 100 |
| 8 | 0.5 | 230 | 730 | 0 |

Example 7: Synthesized Malonic Polyester Compositions and Their Properties

Table 13 lists the compositions of MR 1-6, and Table 14 lists their resin properties.

Glass transition temperature (Tg) was determined using a Q2000 differential scanning calorimeter (DSC) from TA Instruments, New Castle, DE, US, at a scan rate of 20°G/min. Number average molecular weight (Mn) and weight average molecular weight (Mw) Mn were measured by gel permeation chromatography (GPC) using polystyrene equivalent molecular weight. Acid number was measured by using a procedure based on ASTM D7253-1 entitled "Standard Test Method for Polyurethane Raw Materials: Determination of Acidity as Acid Number for Polyether Polyols," and hydroxyl number was measured using a procedure based on ASTM E222-1 entitled "Standard Test Methods for Hydroxyl Groups Using Acetic Anhydride."

Table 13: Synthesized Malonic Polyesters

| | Resin Composition as Charged | | | | |
|---|---|---|---|---|---|
| | Mole Ratio Based on Total Hydroxy Components (%) | | | Mole Ratio Based on Total Acid Components (%) | |
| Modifyin g Resin | TMCD | CHDM | MPdiol | IPA | MAL |
| MR 1 | | 100 | | | 100 |
| MR 2 | | 100 | | | 100 |
| MR 3 | | 100 | | | 100 |
| MR 4 | 100 | | | | 100 |
| MR 5 | 40 | 30 | 30 | 25 | 75 |
| MR 6 | 40 | 30 | 30 | 50 | 50 |

Table 14: Resin Properties of Modifying Polyester Polyols

| Modifying Resin | Tg, °C | Mn | Mw | Acid Number Analyzed | OH Number Analyzed |
|---|---|---|---|---|---|
| MR 1 | -8.2 | 2552 | 7388 | 0 | 49 |
| MR 2 | -4.1 | 2945 | 9889 | 0 | 42 |
| MR 3 | -6.6 | 3402 | 12284 | 0 | 38 |
| MR 4 | -13.6 | 1183 | 1942 | 0 | 94 |
| MR 5 | 8.0 | 5581 | 12767 | 0 | 31 |
| MR 6 | 29.4 | 5755 | 15178 | 0 | 24 |

Example 8: Synthesis of TMCD Polyester (Resin 1)

Using the same method as described in Example 1, a TMCD polyester having the composition listed in Table 15 was prepared. Table 16 lists its resin properties.

Table 15: Synthesized TMCD Polyester

| | Resin Composition as Charged | | | | | |
|---|---|---|---|---|---|---|
| | Mole Ratio Based on Total Hydroxy Components (%) | | | | Mole Ratio Based on Total Acid Components (%) | |
| TMCD Polyest er | TMCD | 1,4-CHDM | MPdiol | TMP | TPA | IPA |
| Resin 1 | 45 | 43 | 10 | 2 | 30 | 70 |

Table 16: Resin Properties of TMCD Polyester

| TMCD Polyester | Tg, °C | Mn | Mw | Acid Number Analyzed | OH Number Analyzed |
|---|---|---|---|---|---|
| Resin 1 | 92 | 10500 | 42000 | 4 | 17 |

Example 9: Preparation of Gold Coating Formulations (GF 1-6)

Coating formulations intended for gold color were prepared by using each modifying resin (MR 1-6) and TMCD polyester (Resin 1). The gold formulations (GF 1-6) prepared from each modifying resin and TMCD polyester are listed in Table 17 and 18. Tables 19 and 20 list the coating properties of said formulations.

Prior to formulating, all polyester polyols were diluted in A150 ND to 50 wt.% solids. The solvent blend was made from the mixture of xylene, butanol and MAK at 30%, 30% and 40% by weight, respectively. An empty glass jar with a lid was labeled and pre-weighted to record the tare weight. For each formulation, Curaphen 40-856-B60, Desmodur® BL 2078/2, Maprenal® 987, Nacure® XC-296B, Nacure® 5076, Lanco™ Glidd 4415 and the solvent blend were weighed out respectively and added in order, to the resin solution while stirring with Dispermat™ high speed disperser. The formulation was then stirred for 10 - 15 minutes at 1500 RPMs with a Cowles blade on a Dispermat™ high speed disperser. Once it was completed, the glass jar containing the formulation was then rolled overnight with slight agitation at ambient conditions.

A food grade approved Desmodur® BL 2078/2 available from Covestro AG, Maprenal® BF 987 available from Prefere Resins and Curaphen 40-856-B60 available from Bitrez were chosen as blocked IPDI trimer, benzoguanamine and m-cresol phenolic-formaldehyde resin crosslinkers, respectively. A food grade approved Nacure® XC-296B and Nacure® 5076 both available from King Industries were chosen as $H_3PO_4$ and DDBSA catalysts, respectively. A food grade approved Lanco™ Glidd 4415 from Lubrizol was chosen as wax.

Table 17: Gold Coating Formulations Based on Modifying Resin 1 and TMCD Containing Polyester

| Component | Solids/Active % | GF 1A | GF 1B | GF 1C |
|---|---|---|---|---|
| | | Weight (g) | Weight (g) | Weight (g) |
| MR 1 (modifying resin) | 50% | 19.71 | 4.96 | 5.17 |
| Resin 1 (TMCD Polyester) | 50% | 45.99 | 57.00 | 59.49 |
| Curaphen 40-856-B60 | 60% | 21.06 | 15.01 | 15.01 |
| Desmodur® BL 2078/2 | 60% | 8.42 | 4.65 | 4.65 |
| Maprenal® BF 987 | 74 | | 3.04 | 1.22 |
| Nacure® XC-296B | 28% | 2.02 | 1.80 | 1.80 |
| Nacure® 5076 | 70% | | 0.09 | 0.09 |
| Lanco™ Glidd 4415 | 15% | 2.25 | | |
| BYK® - 392 | 52% | 0.56 | 0.5 | |
| BYK® -1790 | 100% | | | 0.26 |
| Solvent Blend (Xylene, Butanol, MAK 30/30/40) | 0% | | 12.95 | 12.31 |
| Total | | 100.00 | 100.00 | 100.00 |
| Calculation: | | | | |
| % Modifying Resin on total polyesters | | 30.00% | 8.00% | 8.00% |

(continued)

| Component | Solids/Active % | GF 1A | GF 1B | GF 1C |
|---|---|---|---|---|
| | | Weight (g) | Weight (g) | Weight (g) |
| % Total solids binder | | 50.53% | 45.03% | 45.03% |
| % Polyester polyol on total binder | | 65.00% | 68.80% | 71.80% |
| % IPDI on total binder | | 10.00% | 6.20% | 6.20% |
| % Phenolic on total binder | | 25.00% | 20.00% | 20.00% |
| % Benzo on total binder | | | 5.00% | 2.00% |
| %H3PO4 catalyst as is on binder | | 4.00% | 4.00% | 4.00% |
| % DDBSA catalyst as is on binder | | | 0.20% | 0.20% |

Table 18: Gold Coating Formulations Based on Modifying Resins 2-6 and TMCD Containing Polyester

| Component | Solids/ Active % | GF 2 | GF 3 | GF 4 | GF 5 | GF 6 |
|---|---|---|---|---|---|---|
| | | Weight (g) | Weight (g) | Weight (g) | Weight (g) | Weight (g) |
| MR 2 (modifying resin) | 50% | 5.17 | | | | |
| MR 3 (modifying resin) | 50% | | 5.17 | | | |
| MR 4 (modifying resin) | 60% | | | 4.50 | | |
| MR 5 (modifying resin) | 50% | | | | 22.23 | |
| MR 6 (modifying resin) | 50% | | | | | 32.18 |
| Resin 1 (TMCD Polyester) | 50% | 59.49 | 59.49 | 62.16 | 36.27 | 26.33 |
| Curaphen 40-856-B60 | 60% | 15.01 | 15.01 | 15.01 | 18.75 | 18.75 |
| Desmodur® BL 2078/2 | 60% | 4.65 | 4.65 | 3.75 | 7.50 | 7.50 |
| Maprenal® BF 987 | 74 | 1.22 | 1.22 | | | |
| Nacure® XC-296B | 28% | 1.80 | 1.80 | 0.23 | 1.80 | 1.80 |
| Nacure® 5076 | 70% | 0.09 | 0.09 | | | |
| Lanco™ Glidd 4415 | 15% | | | | | |
| BYK® - 392 | 52% | | | | 0.50 | 0.50 |
| BYK® -1790 | 100% | 0.26 | 0.26 | | | |
| Solvent Blend (Xylene, Butanol, MAK 30/30/40) | 0% | 12.31 | 12.31 | 14.35 | 12.95 | 12.95 |
| Total | | 100.00 | 100.00 | 100.00 | 100.00 | 100.00 |
| Calculatio n: | | | | | | |
| % Modifying Resin on total polyesters | | 8.00% | 8.00% | 8.00% | 38.00% | 55.00% |
| % Total solids binder | | 45.03% | 45.03% | 45.04% | 45.00% | 45.00% |
| % Polyester polyol on total binder | | 71.80% | 71.80% | 75.00% | 65.00% | 65.00% |
| % IPDI on total binder | | 6.20% | 6.20% | 5.00% | 10.00% | 10.00% |
| % Phenolic on total binder | | 20.00% | 20.00% | 20.00% | 25.00% | 25.00% |
| % Benzo on total binder | | 2.00% | 2.00% | | | |
| %H3PO4 catalyst as is on binder | | 4.00% | 4.00% | 0.51% | 4.00% | 4.00% |
| % DDBSA catalyst as is on binder | | 0.20% | 0.20% | | | |

The formulations prepared from Example 9 were applied on tin panels available from Reynolds Metals Company-0.19 mm thickness, 2.2 g/m$^2$ tin content, temper and annealing type DR-8CA (described as Reynolds substrate) by casting wet films with wire wound rods - RDS 10 (available from R.D. Specialties, Inc.). This yielded a final dry film weight to achieve approximately 6 - 7 grams/m$^2$. The cast panels were placed in a rack and held vertically in an oven for cure. A Despatch forced air oven was preheated to a setting temperature of 203 °C. The coated panels in the rack were then placed into the oven for 18 minutes of bake cycle time in order to allow the coatings to be baked at 200 °C Peak Metal Temperature (PMT) for 10 minutes. In conclusion of baking cycle, the panel rack was removed from oven and allowed to cool to ambient conditions. A Sencon SI9600 coating thickness gauge was used to confirm the dry film weight of the applied coating. Once the coatings were made, coating performance tests including MEK Double Rubs, Wedge Bend, Microcracking and Sterilization Resistance Testing were performed on them. For Microcracking test, the wet films were casted using wire wound rods - RDS 6 (available from R.D. Specialties, Inc.) which yielded a final dry film weight to achieve approximately 3.0 - 3.5 grams/m$^2$. The micro-cracking test was done using Micro-cracking Testing Method # 1 for GF 1A, GF 1B, GF5 and GF6 and Micro-cracking Test Method #2 for GF 1C, GF2 - GF4.

Table 19: Gold Coatings GF 1A to GF 1C Properties

| Examples | MEK double Rubs | Pass % of wedge bend | Micro-cracking rating | Total Retort % |
|---|---|---|---|---|
| GF 1A | 100+ | 65% | 4.0 | 88% |
| GF 1B | 100+ | 75% | 3.5 | 98% |
| GF 1C | 100+ | 74% | 2.0 | 89% |

Table 20: Gold Coating GF 2 to GF 6 Properties

| Examples | MEK double Rubs | Pass % of wedge bend | Micro-cracking rating | Total Retort % |
|---|---|---|---|---|
| GF 2 | 100+ | 70% | 3.0 | 89% |
| GF 3 | 100+ | 73% | 4.5 | 89% |
| GF 4 | 100+ | 85% | 4.2 | 99% |
| GF 5 | 100+ | 72% | 4.0 | 87% |
| GF 6 | 100+ | 34% | 3.5 | 88% |

Comparative Example 1: Synthesis of Comparative Malonic Polyester-(CMR-11

The polyol was produced using a resin rig reactor setup controlled with automated control software. A 500 mL, one-neck, round-bottom flask was carefully charged with purified isophthalic acid (IPA), 2,2,4,4-tetramethyl-1,3-cyclobutanediol (TMCD), 1,4-cyclohexanedimethanol (CHDM), 2-methyl-1,3-propanediol (MP Diol), and Fascat 4100 (monobutyltin oxide) catalyst in the amounts shown in Table 21 below. The flask was equipped with a polymer head adapter with stainless steel mechanical stirrer and securely clamped to the polymerization rig. To the distillation head, a distillation side arm and Erlenmeyer flask were attached. The automated-controlled vacuum system was attached to the flask side arm to allow for a reduction in pressure of the reaction vessel. The Belmont metal bath was preheated to 20°C above the recipe starting temperature (recipe shown in Table 22 below). The apparatus was subjected to two iterations of a nitrogen ($N_2$) purge to remove oxygen and then dunked into the metal bath to begin stage 1 of the recipe. Dry ice was used to ensure that the solvent traps were sufficiently cold to prevent any solvent/organic matter from going to the vacuum pump. At stage 4 of the reaction recipe, the metal heating bath is lowered down from the reaction flask and the flask was allowed to cool for 15 minutes. Then dimethyl malonate (MAL) was injected through the sample port septum via syringe. The reaction was mixed for an additional 15 minutes and then the metal bath was raised back up to submerge the flask to proceed the rest of the recipe. After completion the synthetic recipe, the polymer was cooled in dry-ice and removed from the stir-rod. The cold material was broken up with a hammer, then dissolved in A150ND to a target weight percent of 50% solids and filtered through a ~250 μm paint filter prior to use in the formulation and application testing.

Table 21

| Charge | | | | | |
|---|---|---|---|---|---|
| **Raw Material** | **Moles** | **Equivalents** | **Weight (g)** | **Charge Weight (includin g excess)** | **% Excess** |
| ***Stage 1*** | | | | | |
| PIA | 0.3750 | 0.7500 | 62.30 | **62.30** | 0 |
| TMCD | 0.2088 | 0.4177 | 30.12 | **31.62** | 5 |
| 1,4-CHDM | 0.1566 | 0.3133 | 22.59 | **22.81** | 1 |
| MP Diol | 0.1566 | 0.3133 | 14.11 | **14.25** | 1 |
| ***Stage 2*** | | | | | |
| MAL | 0.1250 | 0.2500 | 16.51 | **16.51** | 5 |
| | | ***Total Charge*** | 145.63 | | |
| | | ***Minus Condensate*** | 21.53 | | |
| | | ***Yield*** | 124.11 | | |
| **(Catalyst)** | **Concentration (ppm)** | | | | |
| Fascat 4100 | 400 | | | 0.10 | |

Table 22

| Recipe | | | | |
|---|---|---|---|---|
| **Step** | **Time (min)** | **Temp (°C)** | **Vac (torr)** | **Stir (rpm)** |
| 1 | 1 | 160 | 730 | 0 |
| 2 | 180 | 240 | 730 | 100 |
| 3 | 120 | 240 | 730 | 100 |
| 4 | 30 | 160 | 730 | 0 |
| 5 | 40 | 200 | 730 | 100 |
| 6 | 60 | 200 | 730 | 100 |
| 7 | 30 | 200 | 1.5 | 100 |
| 8 | 120 | 200 | 1.5 | 100 |
| 9 | 0.5 | 200 | 730 | 0 |

Comparative Example 2: Synthesis of Comparative Malonic Polyester- (CMR-2)

The polyol was produced using a resin rig reactor setup controlled with automated control software. A 500 mL, one-neck, round-bottom flask was carefully charged with purified isophthalic acid (IPA), succinic acid (SA), 2,2,4,4-tetramethyl-1,3-cyclobutanediol (TMCD), 1,4-cyclohexanedimethanol (CHDM), 2-methyl-1,3-propanediol (MP Diol), and Fascat 4100 (monobutyltin oxide) catalyst in the amounts shown in the Table 23 below. The flask was equipped with a polymer head adapter with stainless steel mechanical stirrer and securely clamped to the polymerization rig. To the distillation head, a distillation side arm and Erlenmeyer flask were attached. The automated-controlled vacuum system was attached to the flask side arm to allow for a reduction in pressure of the reaction vessel. The Belmont metal bath was preheated to 20°C above the first recipe starting temperature (recipe shown in Tables 24 and 25 below). The apparatus was subjected to two iterations of a nitrogen ($N_2$) purge to remove oxygen and then dunked into the metal bath to begin stage 1 of the recipe. Dry ice was used to ensure that the solvent traps were sufficiently cold to prevent any solvent/organic matter from going to the vacuum pump. After completion the first synthetic recipe, the polymer was cooled in dry-ice and removed from the stir-rod. The material was ground into 6mm pellets and then loaded into a second 500 mL, one-neck, round-bottom flask. Dimethyl malonate (MAL) was added and then the flask was reassembled into the resin rig reactor setup described above. The second reaction recipe shown below was then followed to completion. After completion the synthetic recipe, the polymer was cooled in dry-ice and removed from the stir-rod. The cold material was broken up with a hammer, then dissolved in A150ND to a target weight percent of 50% solids and filtered through a ~250 μm paint filter prior to use in the formulation and application testing.

Table 23

| Charge | | | | | |
|---|---|---|---|---|---|
| **Raw Material** | **Moles** | **Equivalents** | **Weight (g)** | **Charge Weight (including excess)** | **% Excess** |
| ***Stage 1*** | | | | | |
| PIA | 0.3750 | 0.7500 | 62.30 | **62.30** | 0 |
| SA | 0.0500 | 0.1000 | 5.91 | **5.91** | 0 |
| TMCD | 0.2089 | 0.4178 | 30.13 | **31.63** | 5 |
| 1,4-CHDM | 0.1567 | 0.3134 | 22.59 | **22.82** | 1 |
| MP Diol | 0.1567 | 0.3134 | 14.12 | **14.26** | 1 |
| ***Stage 2*** | | | | | |
| MAL | 0.0750 | 0.1500 | 9.91 | **9.91** | 5 |
| | | ***Total Charge*** | 144.95 | | |
| | | ***Minus Condensate*** | 20.12 | | |
| | | ***Yield*** | 124.83 | | |
| **(Catalyst)** | **Concentration (ppm)** | | | | |
| Fascat 4100 | 400 | | | **0.10** | |

Table 24

| Recipe (oligomers, without malonate) | | | | |
|---|---|---|---|---|
| **Step** | **Time (min)** | **Temp (°C)** | **Vac (torr)** | **Stir (rpm)** |
| 1 | 1 | 160 | 730 | 0 |
| 2 | 180 | 240 | 730 | 100 |
| 3 | 60 | 240 | 730 | 100 |
| 4 | 30 | 240 | 1.5 | 100 |
| 5 | 60 | 240 | 1.5 | 100 |
| 8 | 0.5 | 240 | 730 | 0 |

Table 25

| Recipe (with malonate addition) | | | | |
|---|---|---|---|---|
| **Step** | **Time (min)** | **Temp (°C)** | **Vac (torr)** | **Stir (rpm)** |
| 1 | 1 | 160 | 730 | 0 |
| 2 | 40 | 200 | 730 | 100 |
| 3 | 60 | 200 | 730 | 100 |
| 4 | 30 | 200 | 1.5 | 100 |
| 5 | 120 | 200 | 1.5 | 100 |
| 6 | 0.5 | 200 | 730 | 0 |

Comparative Example 3: Synthesized Comparative Malonic Polyester

Compositions and Their Properties

Table 26: Synthesized Malonic Polyesters

| | Resin Composition as Charged | | | | | |
|---|---|---|---|---|---|---|
| | Mole Ratio Based on Total Hydroxy Components (%) | | | Mole Ratio Based on Total Acid Components (%) | | |
| Modifying Resin | TMCD | CHDM | MPdiol | IPA | MAL | SA |
| CMR 1 | 40 | 30 | 30 | 75 | 25 | 0 |
| CMR 2 | 40 | 30 | 30 | 75 | 15 | 10 |

Table 27: Resin Properties of Modifying Polyester Polyols

| Modifying Resin | Tg, °C | Mn | Mw | Acid Number Analyzed | OH Number Analyzed |
|---|---|---|---|---|---|
| CMR 1 | 56.2 | 10891 | 26827 | 0 | 9 |
| CMR 2 | 50.5 | 6485 | 18108 | 0 | 7 |

Comparative Example 4: Preparation of Comparative Gold Coating

Formulations (CGF 1-2)

Coating formulations intended for gold color were prepared by using each comparative modifying resin (CMR 1-2) and TMCD polyester (Resin 1). The comparative gold formulations (CGF 1-2) prepared from each comparative modifying resin and TMCD polyester are listed in Table 28. Table 29 lists the coating properties of said formulations.

The solvent blend was made from the mixture of xylene, butanol and MAK at 30%, 30% and 40% by weight, respectively. An empty glass jar with a lid was labeled and pre-weighted to record the tare weight. For each formulation, Curaphen 40-856-B60, Desmodur® BL 2078/2, Nacure® XC-296B and the solvent blend were weighed out respectively and added to the resin solution in order. The formulation was then stirred for 10 - 15 minutes at 1500 RPMs with a Cowles blade on a Dispermat™ high speed disperser. Once it was completed, the glass jar containing the formulation was then rolled overnight with slight agitation at ambient conditions.

A food grade approved Desmodur® BL 2078/2 available from Covestro AG and Curaphen 40-856-B60 available from Bitrez were chosen as blocked IPDI trimer and m-cresol phenolic-formaldehyde resin crosslinkers, respectively. A food grade approved Nacure® XC-296B available from King Industrials was chosen as $H_3PO_4$ catalyst.

Table 28: Gold Coating Formulations Based on Comparative Modifying Resins and TMCD Polyester

| Component | Solids/Active % | CGF-1 | CGF-2 |
|---|---|---|---|
| | | Weight (9) | Weight (g) |
| CMR 1 | 47.20% | 34.40 | |
| CMR 2 | 48.70% | | 34.07 |
| Resin 1 (TMCD Polyester) | 50% | 32.48 | 33.18 |
| Curaphen 40-856-B60 | 60% | 14.43 | 14.75 |
| Desmodur® BL 2078/2 | 60% | 3.61 | 3.69 |
| Nacure® XC-296B | 28% | 0.22 | 0.22 |
| Solvent Blend (Xylene, Butanol, MAK 30/30/40) | 0% | 14.87 | 14.1 |
| Total | | 100.00 | 100.00 |
| % Modifying Resin on total polyesters | | 50.00 % | 50.00% |
| % Total solids binder | | 43.30 % | 44.24% |
| % Polyester polyol on total binder | | 75.00 % | 75.00% |
| % IPDI on total binder | | 5.00% | 5.00% |
| % Phenolic on total binder | | 20.00 % | 20.00% |

(continued)

| Component | Solids/Active % | CGF-1 | CGF-2 |
|---|---|---|---|
| | | Weight (9) | Weight (g) |
| % $H_3PO_4$ catalyst as is on binder | | 0.5% | 0.5% |

The formulations prepared from Comparative Example 4 were applied on tin panels available from Reynolds Metals Company- 0.19 mm thickness, 2.2 g/m$^2$ tin content, temper and annealing type DR-8CA (described as Reynolds substrate) by casting wet films with wire wound rod - RDS 10 (available from R.D. Specialties, Inc.). This yielded a final dry film weight to achieve approximately 6 - 7 grams/m$^2$. The cast panels were placed in a rack and held vertically in an oven for cure. A Despatch forced air oven was preheated to a setting temperature of 203 °C. The coated panels in the rack were then placed into the oven for 18 minutes of bake cycle time in order to allow the coatings to be baked at 200 °C Peak Metal Temperature (PMT) for 10 minutes. In conclusion of baking cycle, the panel rack was removed from oven and allowed to cool to ambient conditions. A Sencon SI9600 coating thickness gauge was used to confirm the dry film weight of the applied coating. Once the coatings were made, coating performance tests including MEK Double Rubs, Wedge Bend, Micro-cracking test and Sterilization Resistance Testing were performed on them. For Micro-cracking test, the wet films were casted using wire wound rod - RDS 5 (available from R.D. Specialties, Inc.) which yielded a final dry film weight to achieve approximately 3.0 - 3.5 grams/m$^2$. Micro-cracking Test Method # 2 was used for evaluating micro-cracking on CGF-1 and CGF-2.

Table 29: Comparative Gold Coating Properties

| Examples | MEK double Rubs | Pass % of wedge bend | Micro-cracking rating | Total Retort % |
|---|---|---|---|---|
| CGF-1 | 33 | 38% | 3.0 | 83% |
| CGF-2 | 30 | 5% | 3.0 | 83% |

Example 10: Model Compound Study Using Various Catalysts

**Scheme and Procedure for Model Reaction**

Model compound studies were conducted to demonstrate reactivity of malonic acid with phenolic resin. Diethyl malonate and 2,6-ditertbutyl-4-hydroxymethyl phenol (molecule P1) were used as analog of polyester and phenolic resins, respectively. All structures of starting materials are shown in Scheme 1.

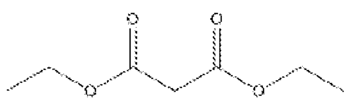

Diethylmalonate

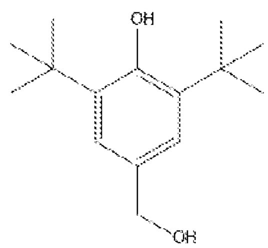

**P1**: 2,6-ditertbutyl-4-hydroxymethyl phenol

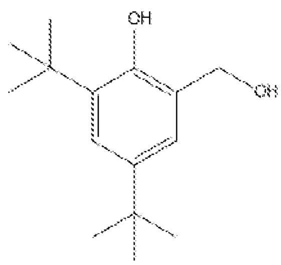

**P2**: 2,4-ditertbutyl-6-hydroxymethyl phenol

Scheme 1. Structures of model malonate compound, diethyl malonate, model phenolic p-hydroxymethyl phenol compound: 2,6-ditertbutyl-4-hydroxymethyl phenol (P1), and model phenolic o-hydroxymethyl phenol compound: 2,4-ditertbutyl-4-hydroxymethyl phenol (P2).

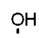

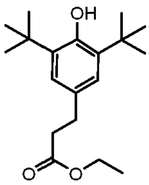
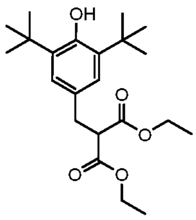
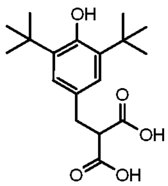
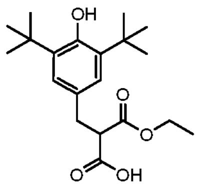
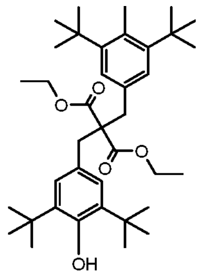

Scheme 2. Examples of structure of various reaction products expected from reaction between diethyl malonate and P1.

In a typical experiment, 200 mg of diethyl malonate and 295 mg of molecule P1 were added to a vial and then 1.22 grams of diluted catalyst solution in acetone (0.12 wt% solid catalyst by weight) was added into the mixture to dissolve the reactants. The catalyst loading is 0.3 wt% with respect to total weight of reactants. After dissolution, the mixture was heated at 203 °C for 18 minutes. The resulting products were then analyzed with gas chromatography coupled with mass spectrometer for identification of reaction products between diethyl malonate and molecule P1 as shown in Scheme 2.

The results are shown in Table 30.

Table 30: List of Model Compound Reactions with Various Catalysts**

| Exampl e No. | Amt. of Diethyl Malonat e (mg) | Model Phenolic | Amt. of Model Phenol ic(mg) | Catalyst Type | Amt. of Catalyst Solutio n (0.12wt % in Aceton e) (g) | Amt. of Addition al Acetone (9) | Product Detecte d |
|---|---|---|---|---|---|---|---|
| MC-1 | 200 | P1 | 295 | None | 1.22 | 0 | Yes |
| MC-2 | 200 | P1 | 295 | Nacure XC296 | 1.22 | 0 | Yes |
| MC-3 | 200 | P1 | 295 | Nacure 5076 | 1.22 | 0 | Yes |
| MC-4 | 200 | P1 | 295 | DBU | 1.22 | 0 | Yes |
| MC-5 | 200 | P1 | 295 | TMG | 1.22 | 0 | Yes |
| MC-6 | 200 | P1 | 295 | DBN | 1.22 | 0 | Yes |
| MC-7 | 200 | P2 | 295 | None | 1.22 | 0 | Yes |
| MC-8 | 200 | P2 | 295 | Nacure XC296 | 1.22 | 0 | Yes |
| MC-9 | 200 | P2 | 295 | Nacure 5076 | 1.22 | 0 | Yes |
| MC-10 | 200 | P2 | 295 | DBU | 1.22 | 0 | Yes |
| MC-11 | 200 | P2 | 295 | TMG | 1.22 | 0 | Yes |
| MC-12 | 200 | P2 | 295 | DBN | 1.22 | 0 | Yes |
| MC-13 | 200 | P1 | 295 | TBD | 1.22 | 0 | Yes |
| MC-14 | 200 | P2 | 295 | TBD | 1.22 | 0 | Yes |
| MC-15 | 200 | P1 | 295 | TMAH | 1.22 | 0 | Yes |
| MC-16* | 200 | P1 | 295 | TMAH | 0.203 | 1.017 | Yes |
| MC-17* | 200 | P1 | 295 | TMAH | 0.406 | 0.814 | Yes |
| MC-18* | 200 | P1 | 295 | TMAH | 0.813 | 0.407 | Yes |
| MC-19 | 200 | P1 | 295 | Choline Hydroxid e | 1.22 | 0 | Yes |
| MC-20 | 200 | P1 | 295 | TEAH | 1.22 | 0 | Yes |

(continued)

| Exampl e No. | Amt. of Diethyl Malonat e (mg) | Model Phenolic | Amt. of Model Phenol ic(mg) | Catalyst Type | Amt. of Catalyst Solutio n (0.12wt % in Aceton e) (g) | Amt. of Addition al Acetone (9) | Product Detecte d |
|---|---|---|---|---|---|---|---|
| MC-21 | 200 | P1 | 295 | TBAH | 1.22 | 0 | Yes |
| *The catalyst loading for MC-16 to 18 are 0.2 wt%, 0.1 wt%, and 0.05 wt%, respectively.<br>** DBU: 1,8-Diazabicyclo[5.4.0]undec-7-ene, TMG: 1,1,3,3-Tetramethylguanidine, DBN: 1,5-Dibicyclo[4.3.0]non-5-ene, TBD: 1,5,7-Triazabicyclo[4.4.0]dec-5-ene, TMAH: tetramethylammonium hydroxide, TEAH: tetraethylammonium hydroxide, TBAH: tetrabutylammonium hydroxide. | | | | | | | |

The invention has been described in detail with reference to the embodiments disclosed herein, but it will be understood that variations and modifications can be effected within the scope of the invention.

## Claims

**1.** A coating composition for metal packaging application, comprising:

a. a 2,2,4,4-tetramethyl-1,3-cyclobutanediol (TMCD) polyester, which is the reaction product of the monomers comprising:

i. TMCD in an amount of 35-80 mole %, based on the total moles of (a)(i-iv),
ii. 1,4-cyclohexanedimethanol (1,4-CHDM) in an amount of 20-65 mole %, based on the total moles of (a)(i-iv),
iii. a diol other than TMCD and other than 1,4-CHDM in an amount of 0-25 mole %, based on the total moles of (a)(i-iv),
iv. trimethylolpropane (TMP) in an amount of 0-5 mole %, based on the total moles of (a)(i-iv),
v. an aromatic diacid in an amount of 90-100 mole %, based on the total moles of (a)(v-vi), and
vi.an aliphatic diacid in an amount of 0-10 mole %, based on the total moles of (a)(v-vi),

b. a malonic polyester, which is the reaction product of the monomers comprising:

i. a cycloaliphatic diol in an amount of 50-100 mole %, based on the total moles of (b)(i-iii),
ii. an acyclic aliphatic diol in an amount of 0-50 mole %, based on the total moles of (b)(i-iii),
iii. a triol in an amount of 0-20 mole %, based on the total moles of (b)(i-iii),
iv. malonic acid, its ester, or a combination thereof, in an amount of 30-100 mole %, based on the total moles of (b)(iv-vi),
v. an aromatic diacid in an amount of 0-70 mole %, based on the total moles of (b)(iv-vi),
vi. an aliphatic diacid in an amount of 0-30 mole %, based on the total moles of (b)(iv-vi), and

c. one or more crosslinkers selected from the group consisting of resole phenolic resin, isocyanate, amino resin crosslinkers, and mixtures thereof,
wherein said TMCD polyester has a glass transition temperature (Tg) of 60-110°C, an acid number of 0-8 mg KOH/g, a hydroxyl number of 3-25 mg KOH/g, a number average molecular weight (Mn) of 5,000-20,000 g/mole, and a weight average molecular weight (Mw) of 10,000-100,000 g/mole, wherein the "glass transition temperature", the "acid number", the "hydroxyl number", the "number average molecular weight" and the "weight average molecular weight" are determined as disclosed in the description;
wherein said malonic polyester has a Tg of -20-60 °C, an acid number of 0-10 mg KOH/g, a hydroxyl number of 20-80 mgKOH/g, an Mn of 2,000-10,000 g/mole, and an Mw of 5,000-50,000 g/mole.

**2.** The coating composition of claim 1, wherein said coating composition has a solvent resistance of greater than 70 MEK double rubs as measured by ASTM D7835 and a wedge bend resistance (% pass) of 60-100 as measured by the method of ASTM D3281.

3. The coating composition of claim 1, wherein said diol (a)(iii) other than TMCD and other than 1,4-CHDM is selected from the group consisting of 2-methyl-1,3-propanediol (MPdiol), 1,6-hexanediol, and a mixture thereof.

4. The coating composition of claim 1, wherein said aromatic diacid (a)(v) is isophthalic acid (IPA), terephthalic acid (TPA), or a mixture thereof, or
wherein said aliphatic diacid (a)(vi) is selected from the group consisting of adipic acid, cyclohexane dicarboxylic acid, dimethyl cyclohexane dicarboxylate, and mixtures thereof.

5. The coating composition of claim 1, wherein said cyclic diol (b)(i) is selected from the group consisting of TMCD, 1,4-cyclohexanedimethanol, and a mixture thereof, or

wherein said acyclic aliphatic diol (b)(ii) is selected from the group consisting of 1,6-hexanediol, 2-methyl-1,3-propanediol, neopentyl glycol, 2,2,4-trimethyl-1,3-pentanediol, and mixtures thereof, or
wherein said triol (b)(iii) is 1,1,1-trimethylolpropane.

6. The coating composition of claim 1, wherein said malonic acid or its ester (b)(iv) is selected from the group consisting of malonic acid, dimethyl malonate, diethyl malonate, and other dialkyl malonates, or

wherein said aromatic diacid (b)(v) is selected from the group consisting of isophthalic acid, dimethyl isophthalate, terephthalic acid, dimethyl terephthalate, and mixtures thereof, or
wherein said aliphatic diacid is one or more selected from the group consisting of succinic acid, adipic acid, sebacic acid, 1,4-cyclohexane dicarboxylic acid, and 1,3-cyclohexane dicarboxylic acid.

7. The coating composition of claim 1, wherein said TMCD polyester (a) is in an amount of 45-95 weight % and said malonic polyester (b) is in an amount of 5-60 weight %, based on the total weight of (a) and (b).

8. The coating composition of claim 1, wherein the one or more crosslinkers (c) is resole phenolic resin, isocyanate, or a mixture thereof.

9. The coating composition of claim 8, wherein said resole phenolic resin is in an amount of 70-90 weight % and said isocyanate in an amount of 10-30 weight %, based on the total weight of the crosslinkers.

10. The coating composition of claim 1 or 9, wherein said isocyanate is isophorone diisocyanate (IPDI).

11. The coating composition of claim 1, wherein the one or more crosslinkers (c) comprises resole phenolic resin and the coating composition further comprises a quaternary ammonium compound as a crosslinking catalyst, or
wherein the coating composition further comprises one or more organic solvents comprising xylene, methyl amyl ketone, 2-butoxyethanol, ethyl-3-ethoxypropionate, toluene, butanol, cyclopentanone, cyclohexanone, ethyl acetate or butyl acetate

12. The coating composition of claim 1, wherein the total amount of TMCD polyester (a) and malonic polyester (b) is in an amount of 50-90 weight % and said crosslinker (c) in an amount of 10-50 weight %, based on the total weight of (a), (b), and (c).

13. A coating composition for metal packaging application, comprising:

a. a 2,2,4,4-tetramethyl-1,3-cyclobutanediol (TMCD) polyester in an amount of 85-95 weight % based on the total weight of (a) and (b), which is the reaction product of the monomers comprising:

i. TMCD in an amount of 35-80 mole %, based on the total moles of (a)(i-iv),
ii. 1,4-cyclohexanedimethanol (1,4-CHDM) in an amount of 20-65 mole %, based on the total moles of (a)(i-iv),
iii. a diol other than TMCD and other than 1,4-CHDM in an amount of 0-25 mole %, based on the total moles of (a)(i-iv),
iv. trimethylolpropane (TMP) in an amount of 0-5 mole %, based on the total moles of (a)(i-iv),
v. an aromatic diacid in an amount of 90-100 mole %, based on the total moles of (a)(v-vi), and
vi. an aliphatic diacid in an amount of 0-10 mole %, based on the total moles of (a)(v-vi),

b. a malonic polyester in an amount of 5-15 weight % based on the total weight of (a) and (b), which is the reaction product of the monomers comprising:

i. TMCD or 1,4-CHDM or a combination thereof in an amount of 85-100 mole %, based on the total moles of (b)(i-ii),
ii. 2-methyl-1,3-propanediol (MPdiol) in an amount of 0-15 mole %, based on the total moles of (b)(i-ii),
iii. malonic acid, its ester, or a combination thereof, in an amount of 85-100 mole %, based on the total moles of (b)(iii-iv), and
iv. isophthalic acid (IPA) in an amount of 0-15 mole %, based on the total moles of (b)(iii-iv),

c. a resole phenolic resin in an amount of 15-30 weight % based on the total weight of (a), (b), (c), and (d), and
d. isophorone diisocyanate (IPDI) in an amount of 5-15 weight % based on the total weight of (a), (b), (c), and (d),

wherein said TMCD polyester has a glass transition temperature (Tg) of 60-110°C, acid number of 0-8 mg KOH/g, hydroxyl number of 3-25 mgKOH/g, number average molecular weight (Mn) of 5,000-20,000 g/mole, and weight average molecular weight (Mw) of 10,000-100,000 g/mole; said malonic polyester has a Tg of -20 to 20 °C, acid number of 0-10 mg KOH/g, hydroxyl number of 20-100 mgKOH/g, Mn of 2,000-10,000 g/mole, and Mw of 10,000-150,000 g/mole, wherein the "glass transition temperature", the "acid number", the "hydroxyl number", the "number average molecular weight" and the "weight average molecular weight" are determined as disclosed in the description; and wherein said coating has a solvent resistance of greater than 70 MEK double rubs as measured by ASTM D7835 and a wedge bend resistance (% pass) of 60-100 as measured by the method of ASTM D3281.

**14.** A coating composition for metal packaging application, comprising:

a. a 2,2,4,4-tetramethyl-1,3-cyclobutanediol (TMCD) polyester in an amount of 85-95 weight % based on the total weight of (a) and (b), which is the reaction product of the monomers comprising:

i. TMCD in an amount of 35-80 mole %, based on the total moles of (a)(i-iv),
ii. 1,4-cyclohexanedimethanol (1,4-CHDM) in an amount of 20-65 mole %, based on the total moles of (a)(i-iv),
iii. a diol other than TMCD and other than 1,4-CHDM in an amount of 0-25 mole %, based on the total moles of (a)(i-iv),
iv. trimethylolpropane (TMP) in an amount of 0-5 mole %, based on the total moles of (a)(i-iv),
v. an aromatic diacid in an amount of 90-100 mole %, based on the total moles of (a)(v-vi), and
vi. an aliphatic diacid in an amount of 0-10 mole %, based on the total moles of (a)(v-vi),

b. a malonic polyester in an amount of 5-15 weight % based on the total weight of (a) and (b), which is the reaction product of the monomers comprising:

i. TMCD in an amount of 30-50 mole %, based on the total moles of (b)(i-iii),
ii. 1,4-CHDM in an amount of 20-40 mole %, based on the total moles of (b)(i-iii),
iii. 2-methyl-1,3-propanediol (MPdiol) in an amount of 20-40 mole %, based on the total moles of (b)(i-iil),
iv. malonic acid, its ester, or a combination thereof, in an amount of 70-85 mole %, based on the total moles of (b)(iv-v), and
v. isophthalic acid (IPA) in an amount of 15-30 mole %, based on the total moles of (b)(iv-v),

c. a resole phenolic resin in an amount of 15-30 weight % based on the total weight of (a), (b), (c), and (d), and
d. isophorone diisocyanate (IPDI) in an amount of 5-15 weight % based on the total weight of (a), (b), (c), and (d),

wherein said TMCD polyester has a glass transition temperature (Tg) of 60-110°C, acid number of 0-8 mg KOH/g, hydroxyl number of 3-25 mgKOH/g, number average molecular weight (Mn) of 5,000-20,000 g/mole, and weight average molecular weight (Mw) of 10,000-100,000 g/mole; said malonic polyester has a Tg of 0 to 40 °C, acid number of 0-10 mg KOH/g, hydroxyl number of 20-100 mgKOH/g, Mn of 2,000-10,000 g/mole, and Mw of 10,000-150,000 g/mole, wherein the "glass transition temperature", the "acid number", the "hydroxyl number", the "number average molecular weight" and the "weight average molecular weight" are determined as disclosed in the description; and wherein said coating has a solvent resistance of greater than 70 MEK double rubs as measured by ASTM D7835 and a wedge bend resistance (% pass) of 60-100 as measured by the method of ASTM D3281.

**15.** An article, of which at least a portion is coated with the coating composition of claims 1 to 14.

**Patentansprüche**

**1.** Beschichtungszusammensetzung für eine Metallverpackungsanwendung, umfassend:

a. einen 2,2,4,4-Tetramethyl-1,3-cyclobutandiol-(TMCD-) Polyester, der das Reaktionsprodukt der folgenden Monomere ist, umfassend:

i. TMCD in einer Menge von 35-80 Mol-%, bezogen auf die Gesamtstoffmenge von (a) (i-iv),
ii. 1,4-Cyclohexandimethanol (1,4-CHDM) in einer Menge von 20-65 Mol-%, bezogen auf die Gesamtstoffmenge von (a) (i-iv),
iii. ein von TMCD verschiedenes und von 1,4-CHDM verschiedenes Diol in einer Menge von 0-25 Mol-%, bezogen auf die Gesamtstoffmenge von (a) (i-iv),
iv. Trimethylolpropan (TMP) in einer Menge von 0-5 Mol-%, bezogen auf die Gesamtstoffmenge von (a) (i-iv),
v. eine aromatische Disäure in einer Menge von 90-100 Mol-%, bezogen auf die Gesamtstoffmenge von (a) (v-vi) und
vi. eine aliphatische Disäure in einer Menge von 0-10 Mol-%, bezogen auf die Gesamtstoffmenge von (a) (v-vi),

b. einen Malonsäure-Polyester, der das Reaktionsprodukt der folgenden Monomere ist, umfassend:

i. ein cycloaliphatisches Diol in einer Menge von 50-100 Mol-%, bezogen auf die Gesamtstoffmenge von (b) (i-iii),
ii. ein acyclische aliphatisches Diol in einer Menge von 0-50 Mol-%, bezogen auf die Gesamtstoffmenge von (b) (i-iii),
iii. ein Triol in einer Menge von 0-20 Mol-%, bezogen auf die Gesamtstoffmenge von (b) (i-iii),
iv. Malonsäure, deren Ester oder eine Kombination davon in einer Menge von 30-100 Mol-%, bezogen auf die Gesamtstoffmenge von (b) (iv-vi),
v. eine aromatische Disäure in einer Menge von 0-70 Mol-%, bezogen auf die Gesamtstoffmenge von (b) (iv-vi),
vi. eine aliphatische Disäure in einer Menge von 0-30 Mol-%, bezogen auf die Gesamtstoffmenge von (b) (iv-vi) und

c. ein oder mehrere Vernetzungsmittel, ausgewählt aus der Gruppe, bestehend aus Resol-Phenolharz, Isocyanat, Aminoharz-Vernetzungsmitteln und Mischungen davon,
wobei der TMCD-Polyester eine Glasübergangstemperatur (Tg) von 60-110 °C, eine Säurezahl von 0-8 mg KOH/g, eine Hydroxylzahl von 3-25 mg KOH/g, ein zahlenmittleres Molekulargewicht (Mn) von 5.000-20.000 g/mol und ein gewichtsmittleres Molekulargewicht (Mw) von 10.000-100.000 g/mol aufweist, wobei die "Glasübergangstemperatur", die "Säurezahl", die "Hydroxylzahl", das "zahlenmittlere Molekulargewicht" und das "gewichtsmittlere Molekulargewicht" wie in der Beschreibung offenbart bestimmt sind;
wobei der Malonsäure-Polyester eine Tg von -20-60 °C, eine Säurezahl von 0-10 mg KOH/g, eine Hydroxylzahl von 20-80 mg KOH/g, ein Mn von 2.000-10.000 g/mol und ein Mw von 5.000-50.000 g/mol aufweist.

**2.** Beschichtungszusammensetzung nach Anspruch 1, wobei die Beschichtungszusammensetzung eine Lösungsmittelbeständigkeit von mehr als 70 MEK-Doppelreibungen, wie gemäß ASTM D7835 gemessen, und eine Keilbiegefestigkeit (% bestanden) von 60-100, wie gemäß dem Verfahren von ASTM D3281 gemessen, aufweist.

**3.** Beschichtungszusammensetzung nach Anspruch 1, wobei das von TMCD verschiedene und von 1,4-CHDM verschiedene Diol (a) (iii) ausgewählt ist aus der Gruppe, bestehend aus 2-Methyl-1,3-propandiol (MPdiol), 1,6-Hexandiol und einer Mischung davon.

**4.** Beschichtungszusammensetzung nach Anspruch 1, wobei die aromatische Disäure (a) (v) Isophthalsäure (IPA), Terephthalsäure (TPA) oder eine Mischung davon ist oder
wobei die aliphatische Disäure (a) (vi) ausgewählt ist aus der Gruppe, bestehend aus Adipinsäure, Cyclohexandicarbonsäure, Dimethylcyclohexandicarboxylat und Mischungen davon.

5. Beschichtungszusammensetzung nach Anspruch 1, wobei das cyclische Diol (b) (i) ausgewählt ist aus der Gruppe, bestehend aus TMCD, 1,4-Cyclohexandimethanol und einer Mischung davon oder wobei das acyclische aliphatische Diol (b) (ii) ausgewählt ist aus der Gruppe, bestehend aus 1,6-Hexandiol, 2-Methyl-1,3-propandiol, Neopentylglykol, 2,2,4-Trimethyl-1,3-pentandiol und Mischungen davon oder
wobei das Triol (b) (iii) 1,1,1-Trimethylolpropan ist.

6. Beschichtungszusammensetzung nach Anspruch 1, wobei die Malonsäure oder deren Ester (b) (iv) ausgewählt ist aus der Gruppe, bestehend aus Malonsäure, Dimethylmalonat, Diethylmalonat und anderen Dialkylmalonaten oder wobei die aromatische Disäure (b) (v) ausgewählt ist aus der Gruppe, bestehend aus Isophthalsäure, Dimethylisophthalat, Terephthalsäure, Dimethylterephthalat und Mischungen davon oder wobei die aliphatische Disäure eine oder mehrere ist, ausgewählt aus der Gruppe, bestehend aus Bernsteinsäure, Adipinsäure, Sebacinsäure, 1,4-Cyclohexandicarbonsäure und 1,3-Cyclohexandicarbonsäure.

7. Beschichtungszusammensetzung nach Anspruch 1, wobei der TMCD-Polyester (a) in einer Menge von 45-95 Gew.-% vorliegt und der Malonsäure-Polyester (b) in einer Menge von 5-60 Gew.-% vorliegt, bezogen auf das Gesamtgewicht von (a) und (b).

8. Beschichtungszusammensetzung nach Anspruch 1, wobei das eine oder die mehreren Vernetzungsmittel (c) Resol-Phenolharz, Isocyanat oder eine Mischung davon sind.

9. Beschichtungszusammensetzung nach Anspruch 8, wobei das Resol-Phenolharz in einer Menge von 70-90 Gew.-% vorliegt und das Isocyanat in einer Menge von 10-30 Gew.-% vorliegt, bezogen auf das Gesamtgewicht des Vernetzungsmittels.

10. Beschichtungszusammensetzung nach Anspruch 1 oder 9, wobei das Isocyanat Isophorondiisocyanat (IPDI) ist.

11. Beschichtungszusammensetzung nach Anspruch 1, wobei das eine oder die mehreren Vernetzungsmittel (c) Resol-Phenolharz umfassen und die Beschichtungszusammensetzung ferner eine quaternäre Ammoniumverbindung als Vernetzungskatalysator umfasst oder
wobei die Beschichtungszusammensetzung ferner ein oder mehrere organische Lösungsmittel umfasst, umfassend Xylol, Methylamylketon, 2-Butoxyethanol, Ethyl-3-ethoxypropionat, Toluol, Butanol, Cyclopentanon, Cyclohexanon, Ethylacetat oder Butylacetat.

12. Beschichtungszusammensetzung nach Anspruch 1, wobei die Gesamtmenge von TMCD-Polyester (a) und Malonsäure-Polyester (b) in einer Menge von 50-90 Gew.-% vorliegt und das Vernetzungsmittel (c) in einer Menge von 10-50 Gew.-% vorliegt, bezogen auf das Gesamtgewicht von (a), (b) und (c).

13. Beschichtungszusammensetzung für eine Metallverpackungsanwendung, umfassend:

a. einen 2,2,4,4-Tetramethyl-1,3-cyclobutandiol-(TMCD-)Polyester in einer Menge von 85-95 Gew.-% bezogen auf das Gesamtgewicht von (a) und (b), der das Reaktionsprodukt der folgenden Monomere ist, umfassend:

i. TMCD in einer Menge von 35-80 Mol-%, bezogen auf die Gesamtstoffmenge von (a) (i-iv),
ii. 1,4-Cyclohexandimethanol (1,4-CHDM) in einer Menge von 20-65 Mol-%, bezogen auf die Gesamtstoffmenge von (a) (i-iv),
iii. ein von TMCD verschiedenes und von 1,4-CHDM verschiedenes Diol in einer Menge von 0-25 Mol-%, bezogen auf die Gesamtstoffmenge von (a) (i-iv),
iv. Trimethylolpropan (TMP) in einer Menge von 0-5 Mol-%, bezogen auf die Gesamtstoffmenge von (a) (i-iv),
v. eine aromatische Disäure in einer Menge von 90-100 Mol-%, bezogen auf die Gesamtstoffmenge von (a) (v-vi) und
vi. eine aliphatische Disäure in einer Menge von 0-10 Mol-%, bezogen auf die Gesamtstoffmenge von (a) (v-vi),

b. einen Malonsäure-Polyester in einer Menge von 5-15 Gew.-% bezogen auf das Gesamtgewicht von (a) und (b), der das Reaktionsprodukt der folgenden Monomere ist, umfassend:

i. TMCD oder 1,4-CHDM oder eine Kombination davon in einer Menge von 85-100 Mol-%, bezogen auf die Gesamtstoffmenge von (b) (i-ii),

ii. 2-Methyl-1,3-propandiol (MPdiol) in einer Menge von 0-15 Mol-%, bezogen auf die Gesamtstoffmenge von (b) (i-ii),
iii. Malonsäure, deren Ester oder eine Kombination davon in einer Menge von 85-100 Mol-%, bezogen auf die Gesamtstoffmenge von (b) (iii-iv) und
iv. Isophthalsäure (IPA) in einer Menge von 0-15 Mol-%, bezogen auf die Gesamtstoffmenge von (b) (iii-iv),

c. ein Resol-Phenolharz in einer Menge von 15-30 Gew.-%, bezogen auf das Gesamtgewicht von (a), (b), (c) und (d), und
d. Isophorondiisocyanat (IPDI) in einer Menge von 5-15 Gew.-%, bezogen auf das Gesamtgewicht von (a), (b), (c) und (d),

wobei der TMCD-Polyester eine Glasübergangstemperatur (Tg) von 60-110 °C, eine Säurezahl von 0-8 mg KOH/g, eine Hydroxylzahl von 3-25 mg KOH/g, ein zahlenmittleres Molekulargewicht (Mn) von 5.000-20.000 g/mol und ein gewichtsmittleres Molekulargewicht (Mw) von 10.000-100.000 g/mol aufweist, wobei der Malonsäure-Polyester eine Tg von -20 bis 20 °C, eine Säurezahl von 0-10 mg KOH/g, eine Hydroxylzahl von 20-100 mg KOH/g, ein Mn von 2.000-10.000 g/mol und ein Mw von 10.000-150.000 g/mol aufweist, wobei die "Glasübergangstemperatur", die "Säurezahl", die "Hydroxylzahl", das "zahlenmittlere Molekulargewicht" und das "gewichtsmittlere Molekulargewicht" wie in der Beschreibung offenbart bestimmt sind; und wobei die Beschichtung eine Lösungsmittelbeständigkeit von mehr als 70 MEK-Doppelreibungen, wie gemäß ASTM D7835 gemessen, und eine Keilbiegefestigkeit (% bestanden) von 60-100, wie gemäß dem Verfahren von ASTM D3281 gemessen, aufweist.

**14.** Beschichtungszusammensetzung für eine Metallverpackungsanwendung, umfassend:

a. einen 2,2,4,4-Tetramethyl-1,3-cyclobutandiol-(TMCD-)Polyester in einer Menge von 85-95 Gew.-% bezogen auf das Gesamtgewicht von (a) und (b), der das Reaktionsprodukt der folgenden Monomere ist, umfassend:

i. TMCD in einer Menge von 35-80 Mol-%, bezogen auf die Gesamtstoffmenge von (a) (i-iv),
ii. 1,4-Cyclohexandimethanol (1,4-CHDM) in einer Menge von 20-65 Mol-%, bezogen auf die Gesamtstoffmenge von (a) (i-iv),
iii. ein von TMCD verschiedenes und von 1,4-CHDM verschiedenes Diol in einer Menge von 0-25 Mol-%, bezogen auf die Gesamtstoffmenge von (a) (i-iv),
iv. Trimethylolpropan (TMP) in einer Menge von 0-5 Mol-%, bezogen auf die Gesamtstoffmenge von (a) (i-iv),
v. eine aromatische Disäure in einer Menge von 90-100 Mol-%, bezogen auf die Gesamtstoffmenge von (a) (v-vi) und
vi. eine aliphatische Disäure in einer Menge von 0-10 Mol-%, bezogen auf die Gesamtstoffmenge von (a) (v-vi),

b. einen Malonsäure-Polyester in einer Menge von 5-15 Gew.-% bezogen auf das Gesamtgewicht von (a) und (b), der das Reaktionsprodukt der folgenden Monomere ist, umfassend:

i. TMCD in einer Menge von 30-50 Mol-%, bezogen auf die Gesamtstoffmenge von (b) (i-iii),
ii. 1,4-CHDM in einer Menge von 20-40 Mol-%, bezogen auf die Gesamtstoffmenge von (b) (i-iii),
iii. 2-Methyl-1,3-propandiol (MPdiol) in einer Menge von 20-40 Mol-%, bezogen auf die Gesamtstoffmenge von (b) (i-iii),
iv. Malonsäure, deren Ester oder eine Kombination davon in einer Menge von 70-85 Mol-%, bezogen auf die Gesamtstoffmenge von (b) (iv-v) und
v. Isophthalsäure (IPA) in einer Menge von 15-30 Mol-%, bezogen auf die Gesamtstoffmenge von (b) (iv-v),

c. ein Resol-Phenolharz in einer Menge von 15-30 Gew.-%, bezogen auf das Gesamtgewicht von (a), (b), (c) und (d), und
d. Isophorondiisocyanat (IPDI) in einer Menge von 5-15 Gew.-%, bezogen auf das Gesamtgewicht von (a), (b), (c) und (d),

wobei der TMCD-Polyester eine Glasübergangstemperatur (Tg) von 60-110 °C, eine Säurezahl von 0-8 mg KOH/g, eine Hydroxylzahl von 3-25 mg KOH/g, ein zahlenmittleres Molekulargewicht (Mn) von 5.000-20.000 g/mol und ein gewichtsmittleres Molekulargewicht (Mw) von 10.000-100.000 g/mol aufweist, wobei der Malonsäure-Polyester eine Tg von 0 bis 40 °C, eine Säurezahl von 0-10 mg KOH/g, eine Hydroxylzahl von 20-100 mg KOH/g, ein Mn von 2.000-10.000 g/mol und ein Mw von 10.000-150.000 g/mol aufweist, wobei die "Glasübergangstemperatur", die

"Säurezahl", die "Hydroxylzahl", das "zahlenmittlere Molekulargewicht" und das "gewichtsmittlere Molekulargewicht" wie in der Beschreibung offenbart bestimmt sind; und wobei die Beschichtung eine Lösungsmittelbeständigkeit von mehr als 70 MEK-Doppelreibungen, wie gemäß ASTM D7835 gemessen, und eine Keilbiegefestigkeit (% bestanden) von 60-100, wie gemäß dem Verfahren von ASTM D3281 gemessen, aufweist.

**15.** Gegenstand, der mindestens teilweise mit der Beschichtungszusammensetzung nach Anspruch 1 bis 14 beschichtet ist.

## Revendications

**1.** Composition de revêtement pour une application d'emballage métallique, comprenant :

a. un polyester de 2,2,4,4-tétraméthyl-1,3-cyclobutanediol (TMCD), qui est le produit de réaction des monomères comprenant :

i. le TMCD en une proportion de 35 à 80 % en moles par rapport au nombre total de moles de (a) (i-iv),
ii. le 1,4-cyclohexanediméthanol (1,4-CHDM) en une proportion de 20 à 65 % en moles par rapport au nombre total de moles de (a) (i-iv),
iii. un diol autre que le TMCD et autre que le 1,4-CHDM en une proportion de 0 à 25 % en moles par rapport au nombre total de moles de (a) (i-iv),
iv. le triméthylolpropane (TMP) en une proportion de 0 à 5 % en moles par rapport au nombre total de moles de (a) (i-iv),
v. un diacide aromatique en une proportion de 90 à 100 % en moles par rapport au nombre total de moles de (a) (v-vi), et
vi. un diacide aliphatique en une proportion de 0 à 10 % en moles par rapport au nombre total de moles de (a) (v-vi),

b. un polyester malonique, qui est le produit de réaction des monomères comprenant :

i. un diol cycloaliphatique en proportion de 50 à 100 % en moles par rapport au nombre total de moles de (b) (i-iii),
ii. un diol aliphatique acyclique en une proportion de 0 à 50 % en moles par rapport au nombre total de moles de (b) (i-iii),
iii. un triol en proportion de 0 à 20 % en moles par rapport au nombre total de moles de (b)(i-iii),
iv. l'acide malonique, son ester ou une combinaison de ceux-ci, en une proportion de 30 à 100 % en moles par rapport au nombre total de moles de (b) (iv-vi),
v. un diacide aromatique en une proportion de 0 à 70 % en moles par rapport au nombre total de moles de (b) (iv-vi),
vi. un diacide aliphatique en une proportion de 0 à 30 % en moles par rapport au nombre total de moles de (b) (iv-vi), et

c. un ou plusieurs agents de réticulation choisis dans le groupe constitué de résine phénolique de type résol, d'isocyanate, d'agents de réticulation de type résines aminées et des mélanges de ceux-ci,
dans laquelle ledit polyester TMCD présente une température de transition vitreuse (Tg) de 60 à 110 °C, un indice d'acide de 0 à 8 mg de KOH/g, un indice d'hydroxyle de 3 à 25 mg de KOH/g, une masse moléculaire moyenne en nombre (Mn) de 5 000 à 20 000 g/mol et une masse moléculaire moyenne en poids (Mw) de 10 000 à 100 000 g/mol, dans laquelle la « température de transition vitreuse », l'« indice d'acide », l'« indice d'hydroxyle », le « poids moléculaire moyen en nombre » et le « poids moléculaire moyen en poids » sont déterminés comme indiqué dans la description ;
dans laquelle ledit polyester malonique présente une Tg de -20 à 60 °C, un indice d'acide de 0 à 10 mg de KOH/g, un indice d'hydroxyle de 20 à 80 mg de KOH/g, un Mn de 2 000 à 10 000 g/mole et un Mw de 5 000 à 50 000 g/mole.

**2.** Composition de revêtement selon la revendication 1, dans laquelle ladite composition de revêtement présente une résistance aux solvants supérieure à 70 doubles frottements avec MEK telle que mesurée selon la norme ASTM D7835 et une résistance à la flexion en coin (% de réussite) de 60 à 100 telle que mesurée selon la méthode de la norme ASTM D3281.

**3.** Composition de revêtement selon la revendication 1, dans laquelle ledit diol (a) (iii) autre que le TMCD et autre que le 1,4-CHDM est choisi dans le groupe constitué du 2-méthyl-1,3-propanediol (MPdiol), du 1,6-hexanediol et d'un mélange de ceux-ci.

**4.** Composition de revêtement selon la revendication 1, dans laquelle ledit diacide aromatique (a) (v) est l'acide isophtalique (IPA), l'acide téréphtalique (TPA) ou un mélange de ceux-ci, ou
dans laquelle ledit diacide aliphatique (a) (vi) est choisi dans le groupe constitué de l'acide adipique, de l'acide cyclohexanedicarboxylique, du cyclohexanedicarboxylate de diméthyle et des mélanges de ceux-ci.

**5.** Composition de revêtement selon la revendication 1, dans laquelle ledit diol cyclique (b)(i) est choisi dans le groupe constitué du TMCD, du 1,4-cyclohexanediméthanol et d'un mélange de ceux-ci, ou

dans laquelle ledit diol aliphatique acyclique (b)(ii) est choisi dans le groupe constitué du 1,6-hexanediol, du 2-méthyl-1,3-propanediol, du néopentylglycol, du 2,2,4-triméthyl-1,3-pentanediol et des mélanges de ceux-ci ou
dans laquelle ledit triol (b) (iii) est le 1,1,1-triméthylolpropane.

**6.** Composition de revêtement selon la revendication 1, dans laquelle ledit acide malonique ou son ester (b) (iv) est choisi dans le groupe constitué de l'acide malonique, du malonate de diméthyle, du malonate de diéthyle et d'autres malonates de dialkyle, ou

dans laquelle ledit diacide aromatique (b)(v) est choisi dans le groupe constitué de l'acide isophtalique, de l'isophtalate de diméthyle, de l'acide téréphtalique, du téréphtalate de diméthyle et des mélanges de ceux-ci, ou
dans laquelle ledit diacide aliphatique est un ou plusieurs acides choisis dans le groupe constitué de l'acide succinique, de l'acide adipique, de l'acide sébacique, de l'acide 1,4-cyclohexanedicarboxylique et de l'acide 1,3-cyclohexanedicarboxylique.

**7.** Composition de revêtement selon la revendication 1, dans laquelle ledit polyester TMCD (a) est présent en une proportion de 45 à 95 % en poids et ledit polyester malonique (b) est présent en une proportion de 5 à 60 % en poids, par rapport au poids total de (a) et (b).

**8.** Composition de revêtement selon la revendication 1, dans laquelle les un ou plusieurs agents de réticulation (c) sont une résine phénolique de type résol, un isocyanate ou un mélange de ceux-ci.

**9.** Composition de revêtement selon la revendication 8, dans laquelle ladite résine phénolique de type résol est présente en une proportion de 70 à 90 % en poids et ledit isocyanate est présent en une proportion de 10 à 30 % en poids par rapport au poids total des agents de réticulation.

**10.** Composition de revêtement selon la revendication 1 ou 9, dans laquelle ledit isocyanate est le diisocyanate d'isophorone (IPDI).

**11.** Composition de revêtement selon la revendication 1, dans laquelle les un ou plusieurs agents de réticulation (c) comprennent une résine phénolique de type résol et la composition de revêtement comprend également un composé d'ammonium quaternaire comme catalyseur de réticulation, ou
dans laquelle la composition de revêtement comprend également un ou plusieurs solvants organiques, comprenant le xylène, la méthylamylcétone, le 2-butoxyéthanol, le 3-éthoxypropionate d'éthyle, le toluène, le butanol, la cyclopentanone, la cyclohexanone, l'acétate d'éthyle ou l'acétate de butyle.

**12.** Composition de revêtement selon la revendication 1, dans laquelle la proportion totale de polyester TMCD (a) et de polyester malonique (b) est de 50 à 90 % en poids et ledit agent de réticulation (c) est présent en une proportion de 10 à 50 % en poids, par rapport au poids total de (a), (b) et (c).

**13.** Composition de revêtement pour une application d'emballage métallique, comprenant :

a. un polyester de 2,2,4,4-tétraméthyl-1,3-cyclobutanediol (TMCD) en une proportion de 85 à 95 % en poids par rapport au poids total de (a) et (b), qui est le produit de réaction des monomères comprenant :

i. le TMCD en une proportion de 35 à 80 % en moles par rapport au nombre total de moles de (a) (i-iv),
ii. le 1,4-cyclohexanediméthanol (1,4-CHDM) en une proportion de 20 à 65 % en moles par rapport au

nombre total de moles de (a) (i-iv),

iii. un diol autre que le TMCD et autre que le 1,4-CHDM en une proportion de 0 à 25 % en moles par rapport au nombre total de moles de (a) (i-iv),

iv. le triméthylolpropane (TMP) en une proportion de 0 à 5 % en moles par rapport au nombre total de moles de (a) (i-iv),

v. un diacide aromatique en une proportion de 90 à 100 % en moles par rapport au nombre total de moles de (a) (v-vi), et

vi. un diacide aliphatique en une proportion de 0 à 10 % en moles par rapport au nombre total de moles de (a) (v-vi),

b. un polyester malonique en une proportion de 5 à 15 % en poids par rapport au poids total de (a) et (b), qui est le produit de réaction des monomères comprenant :

i. le TMCD, ou le 1,4-CHDM, ou une combinaison de ceux-ci en une proportion de 85 à 100 % en moles par rapport au nombre total de moles de (b) (i-ii),

ii. le 2-méthyl-1,3-propanediol (MPdiol) en une proportion de 0 à 15 % en moles par rapport au nombre total de moles de (b) (i-ii),

iii. l'acide malonique, son ester ou une combinaison de ceux-ci en une proportion de 85 à 100 % en moles par rapport au nombre total de moles de (b)(iii-iv), et

iv. l'acide isophtalique (IPA) en une proportion de 0 à 15 % en moles par rapport au nombre total de moles de (b) (iii-iv),

c. une résine phénolique de type résol en une proportion de 15 à 30 % en poids par rapport au poids total de (a), (b), (c) et (d), et

d. le diisocyanate d'isophorone (IPDI) en une proportion de 5 à 15 % en poids par rapport au poids total de (a), (b), (c) et (d),

dans laquelle ledit polyester TMCD présente une température de transition vitreuse (Tg) de 60 à 110 °C, un indice d'acide de 0 à 8 mg de KOH/g, un indice d'hydroxyle de 3 à 25 mg de KOH/g, une masse moléculaire moyenne en nombre (Mn) de 5 000 à 20 000 g/mole et une masse moléculaire moyenne en poids (Mw) de 10 000 à 100 000 g/mole ; ledit polyester malonique présente une Tg de -20 à 20 °C, un indice d'acide de 0 à 10 mg de KOH/g, un indice d'hydroxyle de 20 à 100 mg de KOH/g, un Mn de 2 000 à 10 000 g/mol et un Mw de 10 000 à 150 000 g/mol, dans laquelle la « température de transition vitreuse », l'« indice d'acide », l'« indice d'hydroxyle », le « poids moléculaire moyen en nombre » et le « poids moléculaire moyen en poids » sont déterminés comme indiqué dans la description ; et dans laquelle ledit revêtement présente résistance aux solvants supérieure à 70 doubles frottements avec MEK telle que mesurée selon la norme ASTM D7835 et une résistance à la flexion en coin (% de réussite) de 60 à 100 telle que mesurée selon la méthode de la norme ASTM D3281.

**14.** Composition de revêtement pour une application d'emballage métallique, comprenant :

a. un polyester de 2,2,4,4-tétraméthyl-1,3-cyclobutanediol (TMCD) en une proportion de 85 à 95 % en poids par rapport au poids total de (a) et (b), qui est le produit de réaction des monomères comprenant :

i. le TMCD en une proportion de 35 à 80 % en moles par rapport au nombre total de moles de (a) (i-iv),

ii. le 1,4-cyclohexanediméthanol (1,4-CHDM) en une proportion de 20 à 65 % en moles par rapport au nombre total de moles de (a) (i-iv),

iii. un diol autre que le TMCD et autre que le 1,4-CHDM en une proportion de 0 à 25 % en moles par rapport au nombre total de moles de (a) (i-iv),

iv. le triméthylolpropane (TMP) en une proportion de 0 à 5 % en moles par rapport au nombre total de moles de (a) (i-iv),

v. un diacide aromatique en une proportion de 90 à 100 % en moles par rapport au nombre total de moles de (a) (v-vi), et

vi. un diacide aliphatique en une proportion de 0 à 10 % en moles par rapport au nombre total de moles de (a) (v-vi),

b. un polyester malonique en une proportion de 5 à 15 % en poids par rapport au poids total de (a) et (b), qui est le produit de réaction des monomères comprenant :

i. le TMCD en une proportion de 30 à 50 % en moles par rapport au nombre total de moles de (b) (i-iii),
ii. le 1,4-CHDM en une proportion de 20 à 40 % en moles par rapport au nombre total de moles de (b) (i-iii),
iii. le 2-méthyl-1,3-propanediol (MPdiol) en une proportion de 20 à 40 % en moles par rapport au nombre total de moles de (b) (i-iii),
iv. l'acide malonique, son ester ou une combinaison de ceux-ci, en une proportion de 70 à 85 % en moles par rapport au nombre total de moles de (b)(iv-v), et
v. l'acide isophtalique (IPA) en une proportion de 15 à 30 % en moles par rapport au nombre total de moles de (b) (iv-v),

c. une résine phénolique de type résol en une proportion de 15 à 30 % en poids par rapport au poids total de (a), (b), (c) et (d), et
d. le diisocyanate d'isophorone (IPDI) en une proportion de 5 à 15 % en poids par rapport au poids total de (a), (b), (c) et (d),

dans laquelle ledit polyester TMCD présente une température de transition vitreuse (Tg) de 60 à 110 °C, un indice d'acide de 0 à 8 mg de KOH/g, un indice d'hydroxyle de 3 à 25 mg de KOH/g, une masse moléculaire moyenne en nombre (Mn) de 5 000 à 20 000 g/mole et une masse moléculaire moyenne en poids (Mw) de 10 000 à 100 000 g/mole ; ledit polyester malonique présente une Tg de 0 à 40 °C, un indice d'acide de 0 à 10 mg de KOH/g, un indice d'hydroxyle de 20 à 100 mg de KOH/g, un Mn de 2 000 à 10 000 g/mol et un Mw de 10 000 à 150 000 g/mol, dans laquelle la « température de transition vitreuse », l'« indice d'acide », l'« indice d'hydroxyle », le « poids moléculaire moyen en nombre » et le « poids moléculaire moyen en poids » sont déterminés comme indiqué dans la description ; et dans laquelle ledit revêtement présente une résistance aux solvants supérieure à 70 doubles frottements avec MEK telle que mesurée selon la norme ASTM D7835 et une résistance à la flexion en coin (% de réussite) de 60 à 100 telle que mesurée selon la méthode de la norme ASTM D3281.

**15.** Article dont au moins une partie est revêtue de la composition de revêtement selon les revendications 1 à 14.

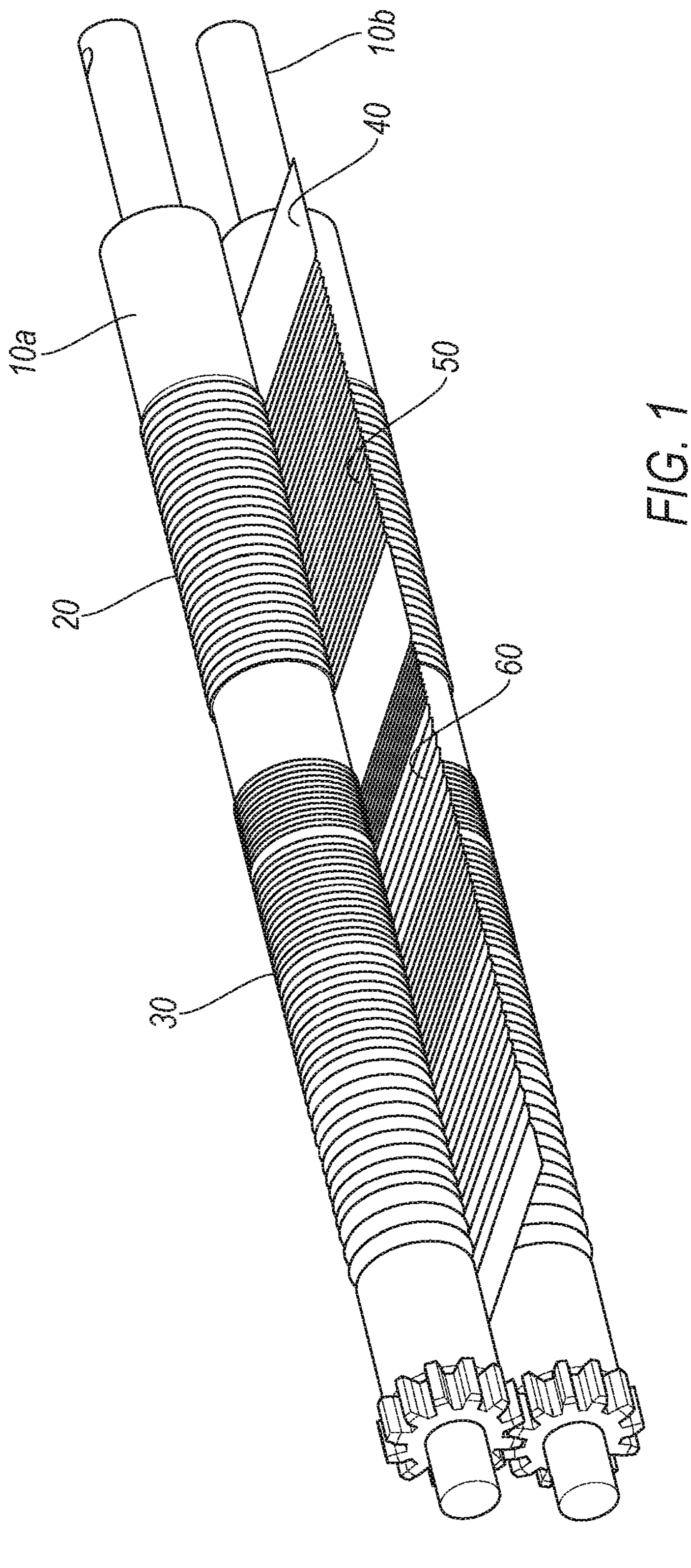


FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2018223126 A1